(19) **Europäisches Patentamt European Patent Office Office européen des brevets**

(11) **EP 3 745 719 B1**

(12) **EUROPEAN PATENT SPECIFICATION**

(45) Date of publication and mention
of the grant of the patent:
**01.10.2025 Bulletin 2025/40**

(21) Application number: **19744538.0**

(22) Date of filing: **23.01.2019**

(51) International Patent Classification (IPC):
*H04N 13/139* (2018.01)   *H04N 21/236* (2011.01)
*H04N 21/431* (2011.01)   *H04N 21/6547* (2011.01)
*H04N 21/84* (2011.01)   *H04N 21/845* (2011.01)
*H04N 23/698* (2023.01)   *H04N 19/597* (2014.01)
*H04N 21/81* (2011.01)   *H04N 21/434* (2011.01)
*H04N 21/854* (2011.01)

(52) Cooperative Patent Classification (CPC):
H04N 19/597; H04N 13/139; H04N 21/23614;
H04N 21/4318; H04N 21/4348; H04N 21/6547;
H04N 21/816; H04N 21/84; H04N 21/8456;
H04N 21/85406; H04N 23/698

(86) International application number:
**PCT/KR2019/000946**

(87) International publication number:
**WO 2019/147008 (01.08.2019 Gazette 2019/31)**

(54) **METHOD AND APPARATUS FOR TRANSMITTING OR RECEIVING 360-DEGREE VIDEO INCLUDING CAMERA LENS INFORMATION**

VERFAHREN UND VORRICHTUNG ZUM SENDEN ODER EMPFANGEN VON 360-GRAD-VIDEOS EINSCHLIESSLICH KAMERAOBJEKTIVINFORMATIONEN

PROCÉDÉ ET APPAREIL DE TRANSMISSION OU DE RÉCEPTION DE VIDÉO À 360 DEGRÉS CONTENANT DES INFORMATIONS D'OBJECTIF DE CAMÉRA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.01.2018 US 201862621034 P**

(43) Date of publication of application:
**02.12.2020 Bulletin 2020/49**

(73) Proprietor: **LG Electronics Inc.**
**07336 SEOUL (KR)**

(72) Inventors:
• **OH, Hyunmook**
**Seoul 06772 (KR)**
• **OH, Sejin**
**Seoul 06772 (KR)**

(74) Representative: **Plasseraud IP**
**104 Rue de Richelieu**
**CS92104**
**75080 Paris Cedex 02 (FR)**

(56) References cited:
EP-A1- 3 624 446      WO-A1-2017/204491
JP-A- 2003 304 509      KR-A- 20140 132 575
KR-A- 20160 082 367      US-A1- 2004 150 726
US-A1- 2013 124 471      US-A1- 2016 373 734

• **"Text of ISO/IEC FDIS 23090-2 Omnidirectional Media Format", no. n17235, 15 December 2017 (2017-12-15), XP030023896, Retrieved from the Internet <URL:http://phenix.int-evry.fr/mpeg/ doc_end_user/documents/120_Macau/wg11/ w17235.zip w17235 FDIS 23090-2 OMAF.docx> [retrieved on 20171215]**

**(Cont. next page)**

- EICHENSEER ANDREA ET AL: "A data set providing synthetic and real-world fisheye video sequences", 2016 IEEE INTERNATIONAL CONFERENCE ON ACOUSTICS, SPEECH AND SIGNAL PROCESSING (ICASSP), IEEE, 20 March 2016 (2016-03-20), pages 1541 - 1545, XP032900861, DOI: 10.1109/ICASSP.2016.7471935
- "WD of ISO/IEC 23000-20 Omnidirectional Media Application Format", no. n16439, 14 November 2016 (2016-11-14), XP030023111, Retrieved from the Internet <URL:http://phenix.int-evry.fr/mpeg/doc_end_user/documents/116_Chengdu/wg11/w16439.zip w16439.docx> [retrieved on 20161114]
- SKUPIN R ET AL: "Standardization status of 360 degree video coding and delivery", 2017 IEEE VISUAL COMMUNICATIONS AND IMAGE PROCESSING (VCIP), IEEE, 10 December 2017 (2017-12-10), pages 1 - 4, XP033325761, DOI: 10.1109/VCIP.2017.8305083

**Description**

[Technical Field]

The present disclosure relates to a 360-degree video, and more particularly, to a method and apparatus for transmitting or receiving a 360-degree video including camera lens information.

[Background Art]

A virtual reality (VR) system allows a user to experience an electronically projected environment. The system for providing VR content may be further improved to provide higher quality images and stereophonic sound. The VR system may allow a user to interactively consume VR content.
The document entitled "Text of ISO/IEC FDIS 23090-2 Omnidirectional Media Format", MPEG Meeting no. 17235, discusses an omnidirectional media format. The document by Eichenseer Andrea et al., entitled "A data set providing synthetic and real-world fisheye video sequences," discusses a dataset providing fisheye video sequences. U.S. Patent Application Publication No. 2016/373734 A1 discusses methods and apparatus related to capturing and/or rendering images. The document entitled "WD of ISO/IEC 23000-20 Omnidirectional Media Application Format" discusses an omnidirectional media application format.

[Disclosure]

[Technical Problem]

An object of the present disclosure is to provide a method and apparatus for increasing the efficiency of VR video data transmission for providing a VR system.
Another object of the present disclosure is to provide a method and apparatus for transmitting VR video data and metadata about the VR video data.
Another object of the present disclosure is to provide a method and apparatus for transmitting VR video data and metadata about camera lens information of the VR video data.
Another object of the present disclosure is to provide a method and apparatus for correcting distortion by reflecting characteristics of a lens based on information related to distortion correction.
Another object of the present disclosure is to provide a method and apparatus for correcting distortion by reflecting characteristics of a lens based on information indicating a radial distortion type.

[Technical Solution]

In one aspect of the present disclosure, provided herein is a method of processing 360-degree image data by a 360-degree video transmission apparatus as set forth in the appended claims.
In another aspect of the present disclosure, provided herein is a method of processing 360-degree image data by a 360-degree video reception apparatus as set forth in the appended claims.

[Advantageous Effects]

According to the present disclosure, 360 content may be efficiently transmitted in an environment that supports next-generation hybrid broadcasting for which a terrestrial broadcasting network and the Internet are used.
According to the present disclosure, a user may be provided with an interactive experience in consuming 360 content.
According to the present disclosure, when a user consumes 360 content, signaling may be performed such that a 360 content producer's intention is accurately reflected.
According to the present disclosure, in delivering 360 content, a transmission capacity may be efficiently increased and necessary information may be delivered.
According to the present disclosure, a polynomial function may be derived by reflecting the characteristics of a lens based on polynomial function related information about a 360-degree image, and distortion occurring in a picture onto which the 360-degree image is projected may be corrected based on the polynomial function. Thereby, the 360-degree image data may be more accurately mapped to a 3D space.
According to the present disclosure, a model for a radial distortion type may be derived by reflecting the characteristics of the lens based on the radial distortion type information about a 360-degree image, and distortion occurring in a picture onto which the 360-degree image is projected may be corrected based on the model. Thereby, the 360-degree image data may be more accurately mapped to a 3D space.

[Description of Drawings]

FIG. 1 is a diagram showing an overall architecture for providing 360-degree video according to the present disclosure.
FIGS. 2 and 3 illustrate the structure of a media file according to an embodiment of the present disclosure.
FIG. 4 illustrates an example of the overall operation of a DASH-based adaptive streaming model.
FIG. 5 is a diagram schematically illustrating a configuration of a 360-degree video transmission apparatus to which the present disclosure is applicable.
FIG. 6 is a diagram schematically illustrating a configuration of a 360-degree video reception apparatus to which the present disclosure is applicable.
FIGS. 7A and 7B exemplarily show an overall architecture for provision of a 360-degree video performed through the 360-degree video transmission apparatus/360-degree video reception apparatus.
FIG. 8 is a diagram illustrating the concept of aircraft principal axes for describing a 3D space according to the present disclosure.
FIGS. 9A and 9B exemplarily illustrate projection schemes according to the present invention.
FIG. 10 exemplarily shows various types of radial distortion.
FIG. 11 illustrates an example of capturing a 360-degree video through a camera lens.
FIG. 12 exemplarily shows an overall architecture for providision of a 360 degree video performed based on camera lens information and/or supplemental camera lens information according to the present disclosure.
FIG. 13 exemplarily shows an example of stitching a 360-degree video to a panoramic image based on camera lens information and/or supplemental camera lens information according to the present disclosure.
FIG. 14 schematically illustrates a method of processing 360-degree image data by a 360-degree video transmission apparatus according to the present disclosure.
FIG. 15 schematically illustrates a 360-degree video transmission apparatus configured to carry out the 360-degree image data processing method according to the present disclosure.
FIG. 16 schematically illustrates a method of processing 360-degree image data by a 360-degree video reception apparatus according to the present disclosure.
FIG. 17 schematically illustrates a 360-degree video reception apparatus configured to carry out the 360-degree image data processing method according to the present disclosure.

[Mode]

The present disclosure may be subjected to various changes and may have various embodiments, and specific embodiments will be described in detail with reference to the accompanying drawings. However, this is not intended to limit the disclosure to the specific embodiments. Terms used in this specification are merely adopted to explain specific embodiments. A singular expression includes a plural expression unless the context clearly indicates otherwise. In this specification, the term "include" or "have" is intended to indicate that characteristics, figures, steps, operations, constituents, and components disclosed in the specification or combinations thereof exist, and should be understood as not precluding the existence or addition of one or more other characteristics, figures, steps, operations, constituents, components, or combinations thereof.
Though individual elements described in the present disclosure are independently shown in the drawings for convenience of description of different functions, this does not mean that the elements are implemented in hardware or software elements separate from each other. For example, two or more of the elements may be combined to form one element, or one element may be divided into a plurality of elements. Embodiments in which respective elements are integrated and/or separated are also within the scope of the present disclosure. The invention is defined by the independent claims. The dependent claims define advantageous embodiments.
Hereinafter, exemplary embodiments of the present disclosure will be described in detail with reference to the accompanying drawings. The same reference numerals will be used for the same components in the drawings, and redundant descriptions of the same components are omitted.

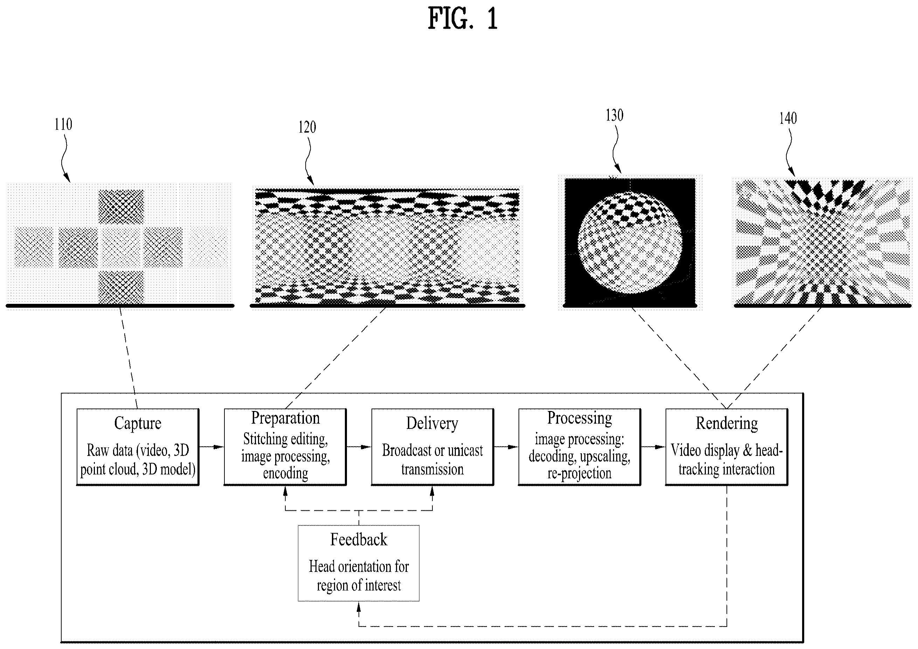

FIG. 1 is a diagram showing an overall architecture for providing 360-degree video according to the present disclosure.
The present disclosure proposes a method of providing 360 content in order to provide virtual reality (VR) to users. VR may refer to a technique or an environment for replicating a real or virtual environment. VR may artificially provide sensuous experiences to users and thus users may experience electronically projected environments therethrough.

360 content may refer to all content for realizing and providing VR, and may include 360-degree video and/or 360 audio. 360-degree video may refer to video or image content which is needed to provide VR and is captured or reproduced in all directions (360 degrees) at the same time. Hereinafter, 360-degree video may refer to 360-degree video. 360-degree video may refer to a video or image presented in various types of 3D space according to a 3D model. For example, 360-degree video may be presented on a spherical surface. 360 audio may be audio content for providing VR and may refer to spatial audio content whose audio generation source may be recognized as being located in a specific 3D space. 360 content may be generated, processed and transmitted to users, and the users may obtain VR experiences using the 360 content.

The present disclosure proposes a method of effectively providing 360-degree video. To provide a 360-degree video, a 360-degree video may be initially captured using one or more cameras. The captured 360-degree video may be transmitted through a series of processes, and the data received on the receiving side may be processed into the original 360-degree video and rendered. Then, the 360-degree video may be provided to a user.

Specifically, the entire processes for providing 360-degree video may include a capture process, a preparation process, a transmission process, a processing process, a rendering process and/or a feedback process.

The capture process may refer to a process of capturing an images or video for each of multiple viewpoints through one or more cameras. Image/video data as shown in part 110 of FIG. 1 may be generated through the capture process. Each plane in part 110 of FIG. 1 may refer to an image/video for each viewpoint. The captured images/videos may be called raw data. In the capture process, metadata related to the capture may be generated.

A special camera for VR may be used for the capture. According to an embodiment, when a 360-degree video for a virtual space generated using a computer is to be provided, the capture operation through an actual camera may not be performed. In this case, the capture process may be replaced by a process of generating related data.

The preparation process may be a process of processing the captured images/videos and the metadata generated in the capture process. In the preparation process, the captured images/videos may be subjected to stitching, projection, region-wise packing, and/or encoding

First, each image/video may be subjected to the stitching process. The stitching process may be a process of connecting the captured images/videos to create a single panoramic image/video or a spherical image/video.

Then, the stitched images/videos may be subjected to the projection process. In the projection process, the stitched images/videos may be projected onto a 2D image. The 2D image may be referred to as a 2D image frame depending on the context. Projection onto a 2D image may be referred to as mapping to the 2D image. The projected image/video data may take the form of a 2D image as shown in part 120 of FIG. 1.

The video data projected onto the 2D image may be subjected to the region-wise packing process in order to increase video coding efficiency. The region-wise packing may refer to a process of dividing the video data projected onto the 2D image into regions and processing the regions. Here, the regions may refer to regions obtained by dividing the 2D image onto which 360-degree video data is projected. According to an embodiment, such regions may be distinguished by dividing the 2D image equally or randomly. According to an embodiment, the regions may be divided according to a projection scheme. The region-wise packing process may be optional, and may thus be omitted from the preparation process.

According to an embodiment, this processing process may include a process of rotating the regions or rearranging the regions on the 2D image in order to increase video coding efficiency. For example, the regions may be rotated such that specific sides of the regions are positioned close to each other. Thereby, coding efficiency may be increased.

According to an embodiment, the processing process may include a process of increasing or decreasing the resolution of a specific region in order to differentiate between the resolutions for the regions of the 360-degree video. For example, the resolution of regions corresponding to a relatively important area of the 360-degree video may be increased over the resolution of the other regions. The video data projected onto the 2D image or the region-wise packed video data may be subjected to the encoding process that employs a video codec.

According to an embodiment, the preparation process may further include an editing process. In the editing process, the image/video data before or after the projection may be edited. In the preparation process, metadata for stitching/projection/encoding/editing may be generated. In addition, metadata about the initial viewpoint or the region of interest (ROI) of the video data projected onto the 2D image may be generated.

The transmission process may be a process of processing and transmitting the image/video data and the metadata obtained through the preparation process. Processing according to any transport protocol may be performed for transmission. The data that has been processed for transmission may be delivered over a broadcast network and/or broadband. The data may be delivered to a receiving side in an on-demand manner. The receiving side may receive the data through various paths.

The processing process may refer to a process of decoding the received data and re-projecting the projected image/video data onto a 3D model. In this process, the image/video data projected onto 2D images may be re-projected onto a 3D space. This process may be referred to as mapping or projection depending on the context. Here, the shape of the 3D space to which the data is mapped may depend on the 3D model. For example, 3D models may include a sphere, a cube, a cylinder and a pyramid.

According to an embodiment, the processing process may further include an editing process and an up-scaling process. In the editing process, the image/video data before or after the re-projection may be edited. When the image/video data has a reduced size, the size of the image/video data may be increased by up-scaling the samples in the up-scaling process. The size may be reduced through down-scaling, when necessary.

The rendering process may refer to a process of rendering and displaying the image/video data re-projected onto the 3D space. The re-projection and rendering may be collectively expressed as rendering on a 3D model. The image/video re-projected (or rendered) on the 3D model may take the form as shown in part 130 of FIG. 1. The part 130 of FIG. 1 corresponds to a case where the image/video data is re-projected onto the 3D model of sphere. A user may view a part of the regions of the rendered image/video through a VR display or the like. Here, the region viewed by the user may take the form as shown in part 140 of FIG. 1.

The feedback process may refer to a process of delivering various types of feedback information which may be acquired in the display process to a transmitting side. Through the feedback process, interactivity may be provided in 360-degree video consumption. According to an embodiment, head orientation information, viewport information indicating a region currently viewed by the user, and the like may be delivered to the transmitting side in the feedback process. According to an embodiment, the user may interact with content realized in a VR environment. In this case, information related to the interaction may be delivered to the transmitting side or a service provider in the feedback process. In an embodiment, the feedback process may be skipped.

The head orientation information may refer to information about the position, angle and motion of the user's head. Based on this information, information about a region currently viewed by the user in the 360-degree video, namely, viewport information may be calculated.

The viewport information may be information about a region currently viewed by the user in the 360-degree video. Gaze analysis may be performed based on this information to check how the user consumes the 360-degree video and how long the user gazes at a region of the 360-degree video. The gaze analysis may be performed at the receiving side and a result of the analysis may be delivered to the transmitting side on a feedback channel. A device such as a VR display may extract a viewport region based on the position/orientation of the user's head, vertical or horizontal filed of view (FOV) information supported by the device, and the like.

According to an embodiment, the aforementioned feedback information may be not only delivered to the transmitting side but also consumed on the receiving side. That is, the decoding, re-projection and rendering processes may be performed on the receiving side based on the aforementioned feedback information. For example, only 360-degree video corresponding to a region currently viewed by the user may be preferentially decoded and rendered based on the head orientation information and/or the viewport information.

Here, the viewport or the viewport region may refer to a region of 360-degree video currently viewed by the user. A viewpoint may be a point which is viewed by the user in a 360-degree video and may represent a center point of the viewport region. That is, a viewport is a region centered on a viewpoint, and the size and shape of the region may be determined by FOV, which will be described later.

In the above-described architecture for providing 360-degree video, image/video data which is subjected to a series of processes of capture/projection/encoding/transmission/decoding/re-projection/rendering may be called 360-degree video data. The term "360-degree video data" may be used as a concept including metadata or signaling information related to such image/video data.

To store and transmit media data such as the audio or video data described above, a standardized media file format may be defined. According to an embodiment, a media file may have a file format based on the ISO base media file format (ISO BMFF).

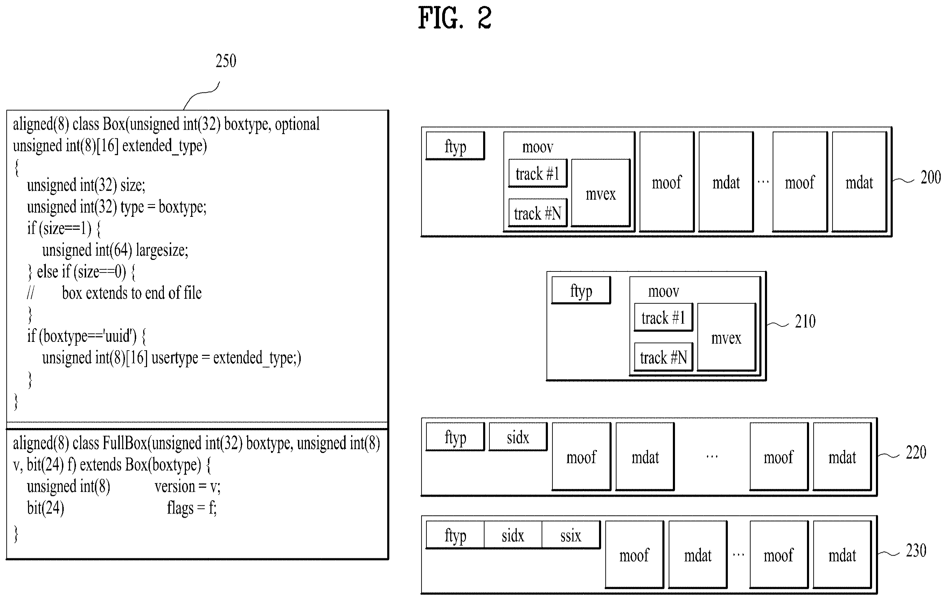

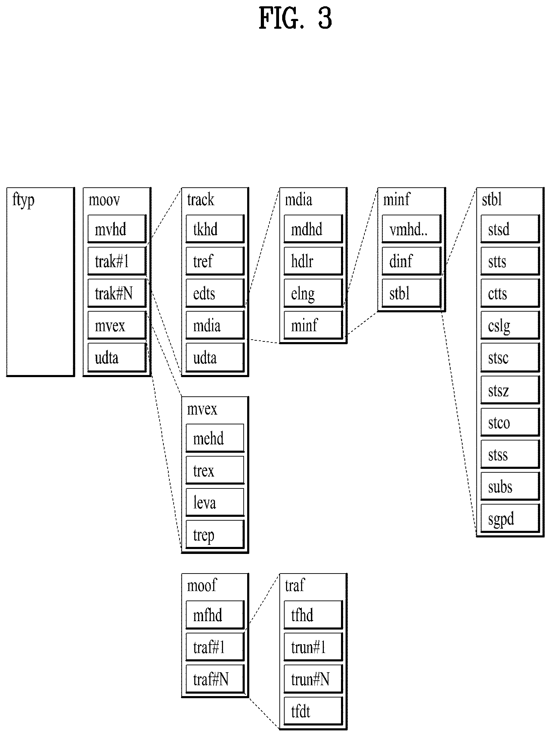

FIGS. 2 and 3 illustrate the structure of a media file according to an embodiment of the present disclosure.

A media file according to the present disclosure may include at least one box. Here, the box may be a data block or object containing media data or metadata related to the media data. The boxes may be arranged in a hierarchical structure. Thus, the data may be classified according to the boxes and the media file may take a form suitable for storage and/or transmission of large media data. In addition, the media file may have a structure which facilitates access to media information as in the case where the user moves to a specific point in the media content.

The media file according to the present disclosure may include an ftyp box, a moov box and/or an mdat box.

The ftyp box (file type box) may provide information related to a file type or compatibility of a media file. The ftyp box may include configuration version information about the media data of the media file. A decoder may identify a media file with reference to the ftyp box.

The moov box (movie box) may include metadata about the media data of the media file. The moov box may serve as a container for all metadata. The moov box may be a box at the highest level among the metadata related boxes. According to an embodiment, only one moov box may be present in the media file.

The mdat box (media data box) may a box that contains actual media data of the media file. The media data may include audio samples and/or video samples and the mdat box may serve as a container to contain such media samples.

According to an embodiment, the moov box may further include an mvhd box, a trak box and/or an mvex box as sub-boxes.

The mvhd box (movie header box) may contain media presentation related information about the media data included in the corresponding media file. That is, the mvhd box may contain information such as a media generation time, change time, time standard and period of the media presentation.

The trak box (track box) may provide information related to a track of the media data. The trak box may contain information such as stream related information, presentation related information, and access related information about an audio track or a video track. Multiple trak boxes may be provided depending on the number of tracks.

According to an embodiment, the trak box may include a tkhd box (track header box) as a sub-box. The tkhd box may contain information about a track indicated by the trak box. The tkhd box may contain information such as a generation time, change time and track identifier of the track.

The mvex box (movie extend box) may indicate that the media file may have a moof box, which will be described later. The moov boxes may need to be scanned to recognize all media samples of a specific track.

According to an embodiment, the media file according to the present disclosure may be divided into multiple fragments (200). Accordingly, the media file may be segmented and stored or transmitted. The media data (mdat box) of the media file may be divided into multiple fragments and each of the fragments may include a moof box and a divided mdat box. According to an embodiment, the information in the ftyp box and/or the moov box may be needed to utilize the fragments.

The moof box (movie fragment box) may provide metadata about the media data of a corresponding fragment. The moof box may be a box at the highest layer among the boxes related to the metadata of the corresponding fragment.

The mdat box (media data box) may contain actual media data as described above. The mdat box may contain media samples of the media data corresponding to each fragment.

According to an embodiment, the moof box may include an mfhd box and/or a traf box as sub-boxes.

The mfhd box (movie fragment header box) may contain information related to correlation between multiple divided fragments. The mfhd box may include a sequence number to indicate a sequential position of the media data of the corresponding fragment among the divided data. In addition, it may be checked whether there is missing data among the divided data, based on the mfhd box.

The traf box (track fragment box) may contain information about a corresponding track fragment. The traf box may provide metadata about a divided track fragment included in the fragment. The traf box may provide metadata so as to decode/play media samples in the track fragment. Multiple traf boxes may be provided depending on the number of track fragments.

According to an embodiment, the traf box described above may include a tfhd box and/or a trun box as sub-boxes.

The tfhd box (track fragment header box) may contain header information about the corresponding track fragment. The tfhd box may provide information such as a default sample size, period, offset and identifier for the media samples of the track fragment indicated by the traf box described above.

The trun box (track fragment run box) may contain information related to the corresponding track fragment. The trun box may contain information such as a period, size and play timing of each media sample.

The media file or the fragments of the media file may be processed into segments and transmitted. The segments may include an initialization segment and/or a media segment.

The file of the illustrated embodiment 210 may be a file containing information related to initialization of the media decoder except the media data. This file may correspond to the initialization segment described above. The initialization segment may include the ftyp box and/or the moov box described above.

The file of the illustrated embodiment 220 may be a file including the above-described fragments. For example, this file may correspond to the media segment described above. The media segment may include the moof box and/or the mdat box described above. The media segment may further include an styp box and/or an sidx box.

The styp box (segment type box) may provide information for identifying media data of a divided fragment. The styp box may serve as the above-described ftyp box for the divided fragment. According to an embodiment, the styp box may have the same format as the ftyp box.

The sidx box (segment index box) may provide information indicating an index for a divided fragment. Accordingly, the sequential position of the divided fragment may be indicated.

According to an embodiment 230, an ssix box may be further provided. When a segment is further divided into sub-segments, the ssix box (sub-segment index box) may provide information indicating indexes of the sub-segments.

The boxes in the media file may further contain further extended information based on a box as illustrated in an embodiment 250 or a FullBox. In this embodiment, the size field and the largesize field may indicate the length of a corresponding box in bytes. The version field may indicate the version of a corresponding box format. The Type field may indicate the type or identifier of the box. The flags field may indicate a flag related to the box.

The fields (attributes) for 360-degree video according to the present disclosure may be carried in a DASH-based adaptive streaming model.

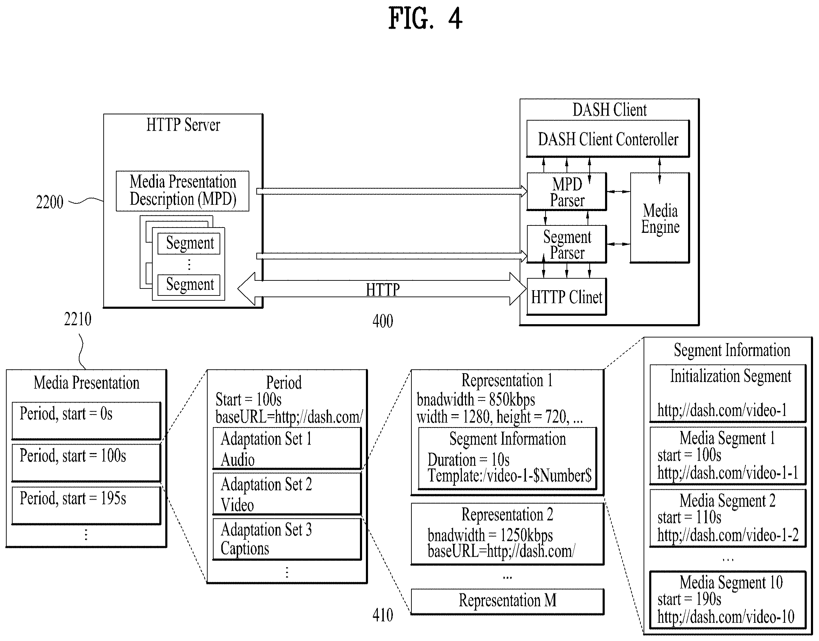

FIG. 4 illustrates an example of the overall operation of a DASH-based adaptive streaming model. A DASH-based adaptive streaming model according to an embodiment 400 shown in the figure describes operations between an HTTP server and a DASH client. Here, DASH (dynamic adaptive streaming over HTTP) is a protocol for supporting HTTP-based adaptive streaming and may dynamically support streaming according to the network condition. Accordingly, AV content may be seamlessly played.

Initially, the DASH client may acquire an MPD. The MPD may be delivered from a service provider such as the HTTP server. The DASH client may make a request to the server for segments described in the MPD, based on the information for access to the segments. The request may be made based on the network condition.

After acquiring the segments, the DASH client may process the segments through a media engine and display the processed segments on a screen. The DASH client may request and acquire necessary segments by reflecting the playback time and/or the network condition in real time (Adaptive Streaming). Accordingly, content may be seamlessly played.

The MPD (media presentation description) is a file containing detailed information allowing the DASH client to dynamically acquire segments, and may be represented in an XML format.

A DASH client controller may generate a command for requesting the MPD and/or segments considering the network condition. In addition, the DASH client controller may perform a control operation such that an internal block such as the media engine may use the acquired information.

An MPD parser may parse the acquired MPD in real time. Accordingly, the DASH client controller may generate a command for acquiring a necessary segment.

A segment parser may parse the acquired segment in real time. Internal blocks such as the media engine may perform a specific operation according to the information contained in the segment.

The HTTP client may make a request to the HTTP server for a necessary MPD and/or segments. In addition, the HTTP client may deliver the MPD and/or segments acquired from the server to the MPD parser or the segment parser.

The media engine may display content on the screen based on the media data contained in the segments. In this operation, the information in the MPD may be used.

The DASH data model may have a hierarchical structure 410. Media presentation may be described by the MPD. The MPD may describe a time sequence of multiple periods constituting the media presentation. A period may represent one section of media content.

In one period, data may be included in adaptation sets. An adaptation set may be a set of multiple media content components which may be exchanged. An adaption may include a set of representations. A representation may correspond to a media content component. In one representation, content may be temporally divided into multiple segments, which may be intended for appropriate accessibility and delivery. To access each segment, a URL of each segment may be provided.

The MPD may provide information related to media presentation. The period element, the adaptation set element, and the representation element may describe a corresponding period, a corresponding adaptation set, and a corresponding representation, respectively. A representation may be divided into sub-representations. The sub-representation element may describe a corresponding sub-representation.

Here, common attributes/elements may be defined. These may be applied to (included in) an adaptation set, a representation, or a sub-representation. The common attributes/elements may include EssentialProperty and/or SupplementalProperty.

The EssentialProperty may be information including elements regarded as essential elements in processing data related to the corresponding media presentation. The SupplementalProperty may be information including elements which may be used in processing the data related to the corresponding media presentation. In an embodiment, descriptors which will be described later may be defined in the EssentialProperty and/or the SupplementalProperty when delivered through an MPD.

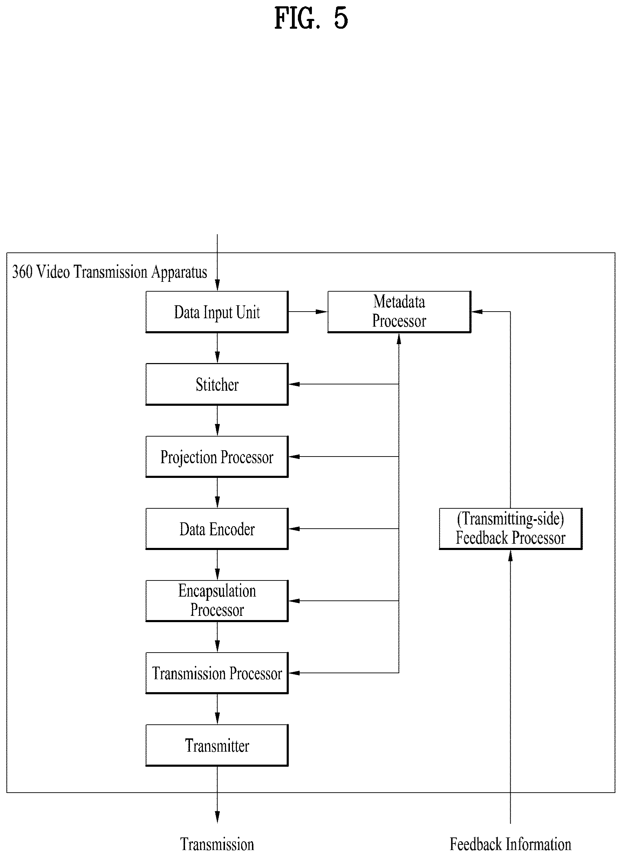

FIG. 5 is a diagram schematically illustrating a configuration of a 360-degree video transmission apparatus to which the present disclosure is applicable.

The 360-degree video transmission apparatus according to the present disclosure may perform operations related to the preparation process or the transmission process described above. The 360 video transmission apparatus may include a data input unit, a stitcher, a projection processor, a region-wise packing processor (not shown), a metadata processor, a (transmitting-side) feedback processor, a data encoder, an encapsulation processor, a transmission processor, and/or a transmitter as internal/external elements.

The data input unit may receive inputs of images/videos for each captured viewpoint. These viewpoint-specific images/videos may be images/videos captured by one or more cameras. The data input unit may also receive an input of metadata generated during the capture process. The data input unit may deliver the input images/videos for each viewpoint to the stitcher, and deliver the metadata of the capture process to the signaling processor.

The stitcher may perform stitching on the captured images/videos for each viewpoint. The stitcher may deliver the stitched 360-degree video data to the projection processor. When necessary, the stitcher may receive necessary metadata from the metadata processor and use the same for stitching. The stitcher may deliver metadata generated in the stitching process to the metadata processor. The metadata of the stitching process may contain information such as an indication of whether stitching has been performed and a stitching type.

The projection processor may project the stitched 360-degree video data onto a 2D image. The projection processor may perform projection according to various schemes, which will be described later. The projection processor may perform mapping in consideration of a corresponding depth of 360-degree video data for each viewopoint. When necessary, the projection processor may receive metadata necessary for projection from the metadata processor and use the same in the projection operation. The projection processor may deliver the metadata generated in the projection process to the metadata processor. The metadata of the projection processor may include a type of a projection scheme.

The region-wise packing processor (not shown) may perform the above-described region-wise packing process. That is, the region-wise packing processor may perform processes such as dividing the projected 360-degree video data into regions, rotating or rearranging each region, or changing the resolution of each region. As described above, the region-wise packing process is optional. When region-wise packing is skipped, the region-wise packing processor may be omitted. When necessary, the region-wise packing processor may receive metadata necessary for region-wise packing from the metadata processor and use the same in the region-wise packing operation. The region-wise packing processor may deliver the metadata generated in the region-wise packing process to the metadata processor. The metadata of the region-wise packing processor may include a degree of rotation and size of each region.

According to an embodiment, the stitcher, the projection processor and/or the region-wise packing processor described above may be implemented by one hardware component.

The metadata processor may process metadata that may be generated in the capture process, the stitching process, the projection process, the region-wise packing process, the encoding process, the encapsulation process, and/or the processing process for transmission. Using the metadata, the metadata processor may generate 360-degree video-related metadata. According to an embodiment, the metadata processor may generate 360-degree video-related metadata in the form of a signaling table. Depending on the signaling context, the 360-degree video-related metadata may be referred to as metadata or 360-degree video-related signaling information. The metadata processor may deliver the acquired or generated metadata to internal elements of the 360-degree video transmission apparatus, as necessary. The metadata processor may deliver the 360-degree video-related metadata to the data encoder, the encapsulation processor, and/or the transmission processor such that the metadata may be transmitted to the receiving side.

The data encoder may encode 360-degree video data projected onto a 2D image and/or 360-degree video data packed region-wise. The 360-degree video data may be encoded in various formats.

The encapsulation processor may encapsulate the encoded 360-degree video data and/or the 360-degree video-related metadata in the form of a file. Here, the 360-degree video-related metadata may be received from the metadata processor described above. The encapsulation processor may encapsulate the data in a file format such as ISOBMFF or CFF, or process the data into DASH segments or the like. According to an embodiment, the encapsulation processor may include the 360-degree video-related metadata in a file format. For example, the 360-related metadata may be included in boxes of various levels in the ISOBMFF, or included as data in a separate track in the file. According to an embodiment, the encapsulation processor may encapsulate the 360-degree video-related metadata into a file. The transmission processor may process the encapsulated 360-degree video data according to the file format so as to be transmitted. The transmission processor may process the 360-degree video data according to any transport protocol. The processing for transmission may include processing for delivery over a broadcast network, and processing for delivery over a broadband. According to an embodiment, the transmission processor may not only receive the 360-degree video data, but also receive metadata related to the 360-degree video from the metadata processor, and may process the same so as to be transmitted.

The transmitter may transmit, over a broadcast network and/or a broadband, the 360-degree video data and/or th 360-degree video-related metadata processed for transmission. The transmitter may include an element for transmission over a broadcast network and/or an element for transmission over a broadband.

According to an embodiment of the present disclosure, the 360-degree video transmission apparatus may further include a data storage unit (not shown) as an internal/external element. The data storage unit may store the encoded 360-degree video data and/or 360-degree video-related metadata before transmitting the same to the transmission processor. These data may be stored in a file format such as ISOBMFF. When the 360-degree video is transmitted in real time, the data storage unit may not be needed. However, to delvier the video in an on-demand manner, in non real time (NRT), or over a broadband, the encapsulated 360-degree data may be stored in the data storage unit for a certain period of time and then transmitted.

According to another embodiment of the present disclosure, the 360-degree video transmission apparatus may further include a (transmitting-side) feedback processor and/or a network interface (not shown) as internal/external elements. The network interface may receive feedback information from the 360-degree video reception apparatus according to the present disclosure, and deliver the same to the transmitting-side feedback processor. The transmitting-side feedback processor may deliver the feedback information to the stitcher, the projection processor, the region-wise packing processor, the data encoder, the encapsulation processor, the metadata processor, and/or the transmission processor. According to an embodiment, after the feedback information is delivered to the metadata processor, it may in turn be delivered to each internal element. The internal elements that receive the feedback information may perform subsequent processing of the 360-degree video data in consideration of the feedback information.

According to another embodiment of the 360-degree video transmission apparatus of the present disclosure, the region-wise packing processor may rotate each region and map the same onto a 2D image. In this operation, the respective regions may be rotated at different angles in different directions, and then mapped onto the 2D image. The rotation of the regions may be performed in consideration of a portion that neighbored the 360-degree video data on the spherical surface or was stitched before projection. Information about the rotation of the regions, that is, the rotation directions, angles, and the like, may be signaled by 360-degree video-related metadata. According to another embodiment of the 360-degree video transmission apparatus of the present disclosure, the data encoder may encoding each region differently. The data encoder may encode a specific region with high quality and other regions with low quality. The transmitting-side feedback processor may deliver the feedback information received from the 360-degree video reception apparatus to the data encoder, such that the data encoder uses a differentiated encoding method for each region. For example, the transmitting-side feedback processor may deliver the viewport information received from the receiving side to the data encoder. The data encoder may encode regions including an area indicated by the viewport information with higher quality (UHD, etc.) than the other regions.

According to another embodiment of the 360-degree video transmission apparatus of the present disclosure, the transmission processor may perform processing for transmission on each region differently. The transmission processor may apply different transmission parameters (modulation order, code rate, etc.) for the respective regions, such that the data transmitted for each region may have different robustness.

Then, the transmitting-side feedback processor may deliver the feedback information received from the 360-degree video reception apparatus to the transmission processor, such that the transmission process performs the differentiated transmission processing for each region. For example, the transmitting-side feedback processor may deliver viewport information received from the receiving side to the transmission processor. The transmission processor may perform processing for transmission on regions including an area indicated by the viewport information, such that the regions may have higher robustness than the other regions.

The internal/external elements of the 360-degree video transmission apparatus according to the present disclosure described above may be hardware elements implemented in hardware. According to an embodiment, the internal/external elements may be changed, omitted, or replaced with other elements. According to an embodiment, supplemental elements may be added to the 360-degree video transmission apparatus.

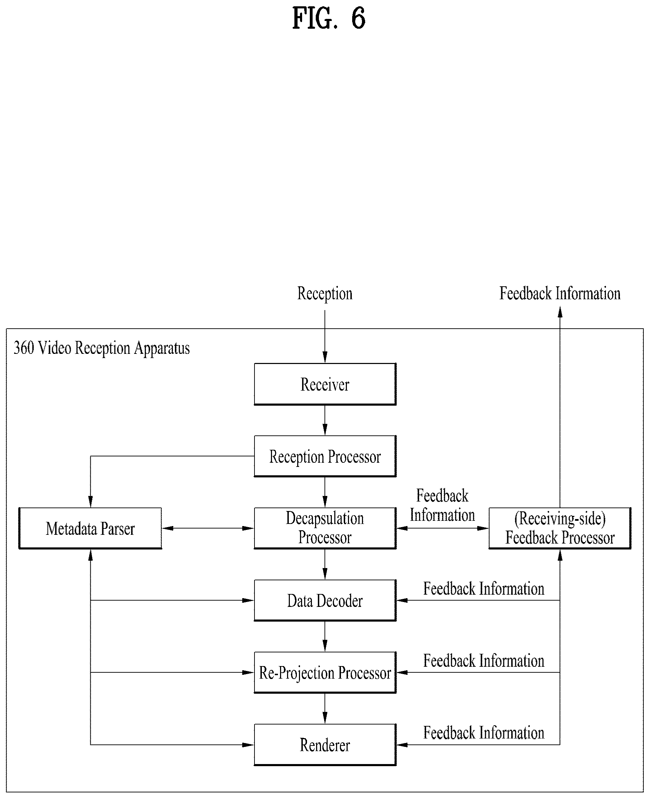

FIG. 6 is a diagram schematically illustrating a configuration of a 360-degree video reception apparatus to which the present disclosure is applicable.

The 360-degree video reception apparatus according to the present disclosure may perform operations related to the processing process and/or the rendering process described above. The 360-degree video reception apparatus may include a receiver, a reception processor, a decapsulation processor, a data decoder, a metadata parser, a (receiving-side) feedback processor, a re-projection processor, and/or a renderer as internal/external elements. A signaling parser may be referred to as a metadata parser.

The receiver may receive 360-degree video data transmitted by the 360-degree video transmission apparatus according to the present disclosure. Depending on the transmission channel, the receiver may receive 360-degree video data over a broadcast network or a broadband.

The reception processor may process the received 360-degree video data according to a transport protocol. The reception processor may perform the reverse process of the process of the above-described transmission processor such that the reverse process corresponds to the processing for transmission on the transmitting side. The reception processor may deliver the acquired 360-degree video data to the decapsulation processor, and deliver the acquired 360-degree video-related metadata to the metadata parser. The 360-degree video-related metadata acquired by the reception processor may be in the form of a signaling table.

The decapsulation processor may decapsulate the 360-degree video data received in the form of a file from the reception processor. The decapsulation processor may decapsulate the files according to ISOBMFF or the like to acquire the 360-degree video data or 360-degree video-related metadata. The acquired 360-degree video data may be delivered to the data decoder, and the acquired 360-degree video-related metadata may be delivered to the metadata parser. The 360-degree video-related metadata acquired by the decapsulation processor may be in the form of a box or track in a file format. When necessary, the decapsulation processor may receive metadata needed for decapsulation from the metadata parser.

The data decoder may decode the 360-degree video data. The data decoder may receive metadata needed for decoding from the metadata parser. The 360-degree video-related metadata acquired in the data decoding process may be delivered to the metadata parser.

The metadata parser may parse/decode the 360-degree video-related metadata. The metadata parser may deliver the acquired metadata to the data decapsulation processor, the data decoder, the re-projection processor, and/or the renderer.

The re-projection processor may re-project the decoded 360-degree video data. The re-projection processor may re-project the 360-degree video data onto a 3D space. The shape of the 3D space may depend on the employed 3D model. The re-projection processor may receive metadata needed for re-projection from the metadata parser. For example, the re-projection processor may receive information about the type of the employed 3D model and the corresponding detailed information from the metadata parser. According to an embodiment, the re-projection processor may re-project only 360-degree video data corresponding to a specific area in the 3D space onto the 3D space based on the metadata needed for re-projection.

The renderer may render the re-projected 360 degree video data. As described above, the 360-degree video data may be rendered in the 3D space. In the case where two processes occur at once as described above, the re-projection processor and the renderer may be integrated with each other, and the processes may all be performed by the renderer. According to an embodiment, the renderer may render only a part that the user is viewing according to the viewpoint information about the user.

The user may view some areas of the rendered 360-degree video through a VR display or the like. The VR display is a device that plays the 360-degree video, and may be included in the 360-degree video reception apparatus (in a tethered state) or connected to the 360-degree video reception apparatus as a separate device (in an un-tethered state).

According to an embodiment of the present disclosure, the 360-degree video reception apparatus may further include a (receiving-side) feedback processor and/or a network interface (not shown) as internal/external elements. The receiving-side feedback processor may acquire feedback information from the renderer, the re-projection processor, the data decoder, the decapsulation processor, and/or the VR display, and process the same. The feedback information may include viewport information, head orientation information, and gaze information. The network interface may receive the feedback information from the receiving-side feedback processor and transmit the same to the 360-degree video transmission apparatus.

As described above, the feedback information may not only be delivered to the transmitting side, but also be consumed at the receiving side. The receiving-side feedback processor may deliver the acquired feedback information to internal elements of the 360-degree video reception apparatus such that the information may be reflected in processes such as rendering. The receiving-side feedback processor may deliver the feedback information to the renderer, the re-projection processor, the data decoder and/or the decapsulation processor. For example, the renderer may preferentially render an area viewed by a user based on the feedback information. The decapsulation processor and the data decoder may preferentially decapsulate and decode the area that the user is viewing or the area to be viewed by the user.

The internal/external elements of the 360-degree video reception apparatus according to the present disclosure described above may be hardware elements implemented in hardware. According to an embodiment, the internal/external elements may be changed, omitted, or replaced with other elements. According to an embodiment, supplemental elements may be added to the 360-degree video reception apparatus.

Another aspect of the disclosure may relate to a method of transmitting 360-degree video and a method of receiving 360-degree video. The method of transmitting/receiving a 360-degree video according to the present disclosure may be implemented by the above-described 360-degree video transmission/reception apparatuses according to the present disclosure or the embodiments of the apparatuses.

The embodiments of the 360-degree video transmission/reception apparatuses, the transmission/reception methods, and the internal/external elements thereof according to the present disclosure described above may be combined with each other. For example, the embodiments of the projection processor and the embodiments of the data encoder may be combined with each other to configure as many embodiments of the 360-degree video transmission apparatus as the combinations. The embodiments configured through such combinations are also within the scope of the present disclosure.

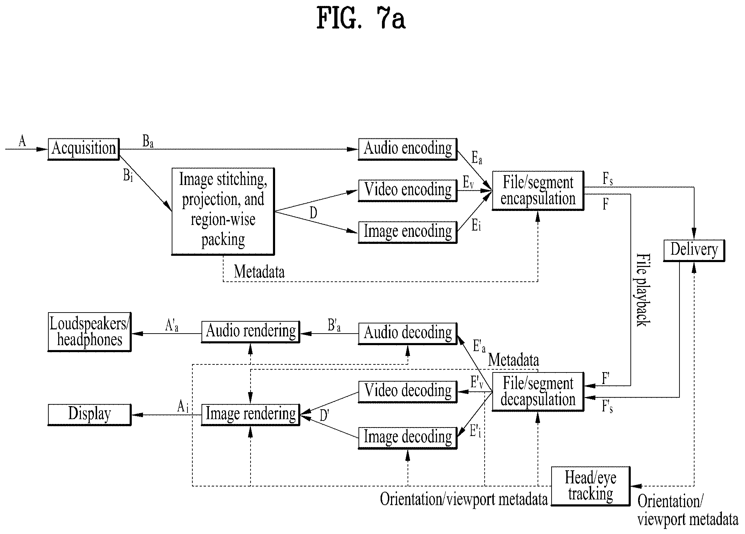

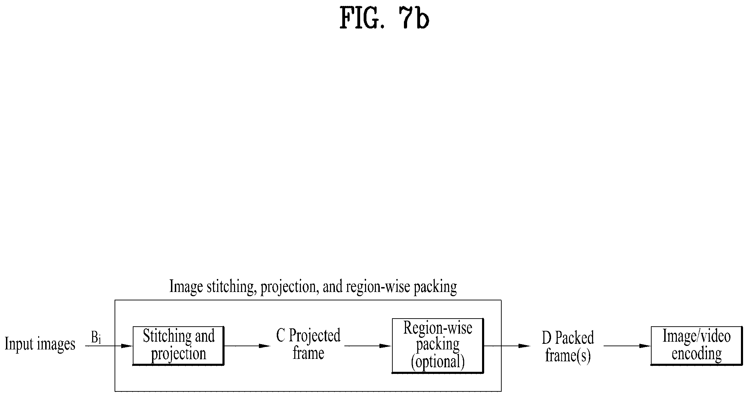

FIGS. 7A and 7B exemplarily show an overall architecture for provision of a 360-degree video performed through the 360-degree video transmission apparatus/360-degree video reception apparatus.

360 content may be provided by an architecture as shown in FIGS. 7A and 7B. The 360 content may be provided in the form of a file or in the form of a segment-based download or streaming service such as DASH. Here, the 360 content may be referred to as VR content.

Specifically, referring to FIG. 7A, 360-degree video data and/or 360 audio data of 360 content may be acquired as described above (Acquisition). That is, a 360-degree video may be captured through a 360 camera, and a 360-degree video transmission apparatus may acquire the 360-degree video data. In addition, the 360 audio data may be processed through an audio pre-processing process and an audio encoding process. In these processes, audio-related metadata may be generated. The encoded audio and audio-related metadata may be subjected to processing (file/segment encapsulation) for transmission.

The 360 degree video data may be processed through the processes as described above. Referring to FIG. 7A, a stitcher of a 360-degree video transmission apparatus may perform stitching on 360-degree video data (Visual stitching). According to an embodiment, this process may be skipped and may be performed at the receiving side.

Referring to FIG. 7A, the projection processor of the 360-degree video transmission apparatus may project the 360-degree video data onto a 2D image (Projection and mapping (packing)). The projection processor may receive 360-degree video data (input images). In this case, the processor may perform the stitching and projection processes. Specifically, in the projection process, the stitched 360-degree video data may be projected onto a 3D space, and the projected 360-degree video data may be arranged on a 2D image. In the present specification, this process may be expressed as projecting 360-degree video data onto a 2D image. Here, the 3D space may be a sphere or a cube. This 3D space may be the same as the 3D space used for re-projection at the receiving side.

The 2D image may be referred to as a projected frame or a projected picture. In addition, a region-wise packing process may be optionally performed on the 2D image. When the region-wise packing process is performed, regions on the 2D image may be mapped onto a packed frame by specifying the position, shape, and size of each region. The packed frame may be referred to as a packed picture. When the region-wise packing process is not performed on the projected frame, the projected frame may be the same as the packed frame. The regions will be described later. The projection process and the region-wise packing process may be expressed as projecting each region of 360-degree video data onto a 2D image. Depending on the design, the 360-degree video data may be directly transformed into a packed frame without intermediate processing.

Referring to FIG. 7A, a packed frame for 360-degree video data may be image-encoded or video-encoded. Even the same 360-degree video content may have 360-degree video data for each viewpoint. In this case, the 360-degree video data for each viewpoint of the content may be encoded into different bit streams. The encoded 360-degree video data may be processed in a file format such as ISOBMFF by the encapsulation processor described above. Alternatively, the encapsulation processor may process the encoded 360-degree video data into segments. The segments may be included in individual tracks for DASH-based transmission.

Along with the processing of 360-degree video data, 360-degree video-related metadata may be generated as described above. The metadata may be delivered in a video stream or file format. The metadata may be used in processes such as encoding, file format encapsulation, and processing for transmission.

The 360 audio/video data may be processed for transmission according to a transport protocol, and then transmitted. The 360-degree video reception apparatus described above may receive the data over a broadcast network or broadband.

As illustrated in FIG. 7A, loudspeakers/headphones, a display, and a head/eye tracking component may be driven by an external device or a VR application of the 360-degree video reception apparatus. According to an embodiment, the 360-degree video reception apparatus may include the loudspeakers/headphones, the display, and the head/eye tracking component. According to an embodiment, the head/eye tracking component may correspond to the receiving-side feedback processor described above.

The 360-degree video reception apparatus may perform processing (file/segment decapsulation) for receiving 360 audio/video data. The 360 audio data may be provided to a user through the loudspeakers/headphones after being processed through audio decoding and audio rendering.

The 360-degree video data may be provided to the user through the display after being processed through image decoding or video decoding and visual rendering. Here, the display may be a VR supporting display or a typical display.

Specifically, as described above, in the rendering process, the 360-degree video data may be re-projected onto a 3D space, and the re-projected 360-degree video data may be rendered. The process may also be viewed as rendering the 360-degree video data in the 3D space.

The head/eye tracking component may acquire and process head orientation information, gaze information, and viewport information about the user. Related details may be the same as those described above.

A VR application communicating with the receiving-side processes described above may be provided at the receiving side.

FIG. 7B exemplarily shows a 2D image to which the region-wise packaging process is applied according to the processing process of 360-degree video and a projection scheme. The process illustrated in FIG. 7B may represent a process of processing input 360-degree video data. Specifically, referring to FIG. 7B, 360-degree video data of the input viewpoint may be stitched and projected onto a 3D projection structure according to various projection schemes. The 360-degree video data projected onto the 3D projection structure may be represented as a 2D image. That is, the 360-degree video data may be stitched and projected onto the 2D image. The 2D image onto which the 360 degree video data is projected may be represented as a projected frame. The region-wise packing process described above may be performed on the projected frame. That is, processing such as dividing an area including the projected 360-degree video data on the projected frame into regions, rotating or rearranging each region, or changing the resolution of each region may be performed. In other words, the region-wise packing process may represent a process of mapping the projected frame to one or more packed frames. The region-wise packing process may be optional. When the region-wise packing process is skipped, the packed frame may be the same as the projected frame. When the region-wise packing process is applied, each region of the projected frame may be mapped to a region of the packed frame, and metadata indicating the position, shape, and size of the region of the packed frame to which each region of the projected frame is mapped may be derived.

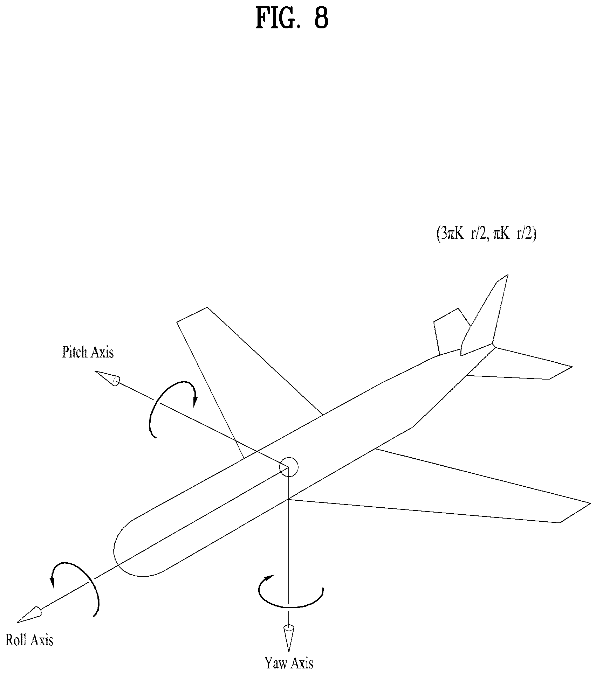

FIG. 8 is a diagram illustrating the concept of aircraft principal axes for describing a 3D space according to the present disclosure. In the present disclosure, the concept of aircraft principal axes may be used to express a specific point, position, direction, spacing, area, and the like in a 3D space. That is, in the present disclosure, the concept of aircraft principal axes may be used to describe the concept of 3D space given before or after projection and to perform signaling therefor. According to an embodiment, a method based on the concept of X, Y, and Z axes or a spherical coordinate system may be used.

An aircraft may rotate freely in three dimensions. The axes constituting the three dimensions are referred to as a pitch axis, a yaw axis, and a roll axis, respectively. In this specification, these axes may be simply expressed as pitch, yaw, and roll or as a pitch direction, a yaw direction, a roll direction.

The pitch axis may refer to an axis around which the front nose of the aircraft rotates upward/downward. In the illustrated concept of aircraft principal axes, the pitch axis may refer to an axis extending from one wing to the other wing of the aircraft.

The yaw axis may refer to a reference axis around which the front nose of the aircraft rotates leftward/rightward. In the illustrated concept of aircraft principal axes, the yaw axis may refer to an axis extending from the top to the bottom of the aircraft. The roll axis may be an axis extending from the front nose to the tail of the aircraft in the concept of aircraft principal axes, and rotation in the roll direction may refer to rotation about the roll axis. As described above, the 3D space in the present disclosure may be described based on the concept of pitch, yaw, and roll.

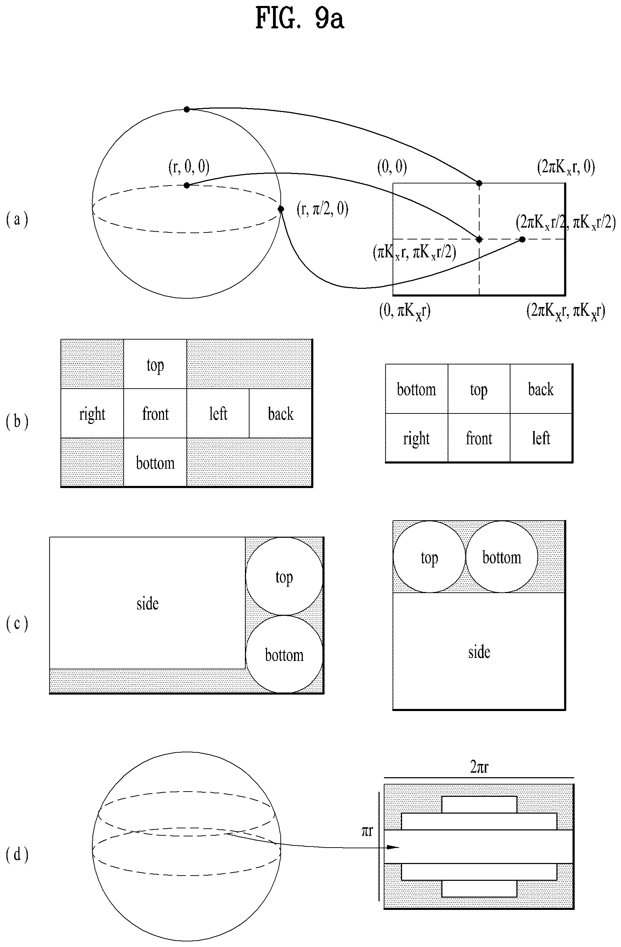

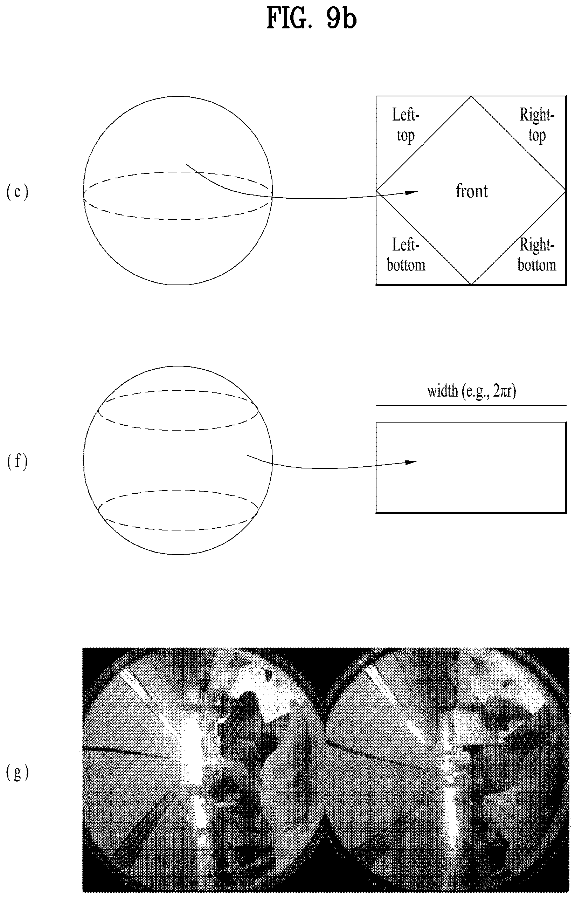

FIGS. 9A and 9B exemplarily illustrate projection schemes according to the present disclosure. As described above, the projection processor of the 360-degree video transmission apparatus according to the present disclosure may project stitched 360-degree video data onto a 2D image. Various projection schemes may be used in this operation. That is, the projection processor may project 360-degree video data onto a 2D image according to various projection schemes. The 2D image may be represented as a projected picture.

According to an embodiment of the present disclosure, projection may be performed using an equirectangular projection scheme. The projection processor may perform projection of 360-degree video data using the equirectangular projection scheme. FIGS. 9A may show the equirectangular projection scheme. The equirectangular projection scheme may also be referred to as equirectangular projection (ERP). When the equirectangular projection scheme is applied, a point $(r, \theta_0, 0)$ on the spherical surface, that is, a point with $\theta = \theta_0$ and $\varphi = 0$, may be mapped to a center pixel of the 2D image. In addition, the principal point of the front camera may be assumed to be the point $(r, 0, 0)$ on the spherical surface. $\varphi_0$ may be fixed to 0. Accordingly, $(x, y)$ obtained by transformation into the XY coordinate system may be transformed into a pixel $(X, Y)$ on the 2D image by the following equation.

Equation 1

$$X = K_x * x + X_O = K_x * (\theta - \theta_0) * r + X_O$$

$$Y = -K_y * y - Y_O$$

In addition, when the left top pixel of the 2D image is positioned at (0, 0) in the XY coordinate system, the offset value along the x-axis and the offset value along the y-axis may be given by the following equation.

Equation 2

$$X_O = K_x * \pi * r$$

$$Y_O = -K_y * \pi / 2 * r$$

Based on this equation, the equation for transformation into the XY coordinate system may be given as follows.

Equation 3

$$X = K_x x + X_O = K_x * (\pi + \theta - \theta_0) * r$$
$$Y = -K_y y - Y_O = K_y * (\pi/2 - \varphi) * r$$

For example, when $\theta_0 = 0$, that is, when the center pixel of the 2D image indicates data with $\theta = 0$ on a spherical surface, the spherical surface may be mapped to an area having a width = $2K_x \pi r$ and a height = $K_x \pi r$ in the 2D image with respect to (0, 0). Data having $\varphi = \pi/2$ on the spherical surface may be mapped to the entire top side of the 2D image. In addition, the data of (r, $\pi/2$, 0) on the spherical surface may be mapped to a point $(3\pi K_x r/2, \pi K_x r/2)$ in the 2D image.

On the receiving side, 360-degree video data on the 2D image may be re-projected onto a spherical surface. Specifically, the re-projection processor of the 360-degree video reception apparatus described above may re-project the 360-degree video data on a 2D image onto a spherical surface. The 2D image may be represented as a projected picture. The transformation equation for this operation may be given as follows.

Equation 4

$$\theta = \theta_0 + X/K_x * r - \pi$$
$$\varphi = \pi/2 - Y/K_y * r$$

For example, on the 2D image, a pixel whose XY coordinates are $(K_x \pi r, 0)$ may be re-projected onto a point with $\theta = \theta_0$ and $\varphi = \pi/2$ on the spherical surface.

According to another embodiment of the present disclosure, projection may be performed using a cubic projection scheme. The projection processor may perform projection of 360-degree video data using the cubic projection scheme. The cubic projection scheme may also be referred to as cube map projection (CMP). FIG. 9A(b) may show the cubic projection scheme. For example, stitched 360-degree video data may be displayed on a spherical surface. The projection processor may divide the 360-degree video data in a cube shape to project the same onto a 2D image. The 360-degree video data on the spherical surface may correspond to each face of the cube and be projected onto the 2D image as shown on the left or right side in FIG. 9A(b).

According to another embodiment of the present disclosure, projection may be performed using a cylindrical projection scheme. The projection processor may perform projection of 360-degree video data using the cylindrical projection scheme. FIG. 9A(c) may show the cylindrical projection scheme. When it is assumed that the stitched 360-degree video data can be displayed on a spherical surface, the projection processor may divide the 360-degree video data in a cylindrical shape and project the same onto a 2D image. The 360-degree video data on the spherical surface may correspond to the side, top, and bottom of a cylinder, respectively and be projected onto the 2D image as shown on the left or right side in FIG. 9A(c).

According to another embodiment of the present disclosure, projection may be performed using a tile-based projection scheme. The projection processor may perform projection of 360-degree video data using the tile-based projection scheme. FIG. 9A(d) may show the tile-based projection scheme. When the tile-based projection scheme is used, the above-described projection processor may divide the 360-degree video data on the spherical surface into one or more detailed regions to project the same onto a 2D image, as shown in FIG. 9A(d). The detailed regions may be referred to as tiles.

According to another embodiment of the present disclosure, projection may be performed using a pyramid projection scheme. The projection processor may perform projection of 360-degree video data using the pyramid projection scheme. FIG. 9B(e) may show the pyramid projection scheme. When it is assumed that the stitched 360-degree video data can be displayed on a spherical surface, the projection processor may consider the 360-degree video data to have a pyramid shape and divide the respective faces thereof to project the same onto a 2D image. The 360-degree video data on the spherical surface may correspond to the front of the pyramid and the four side faces (left top, left bottom, right top, right bottom) of the pyramid, respectively, and be projected as shown on the left side or right side in FIG. 9B(e). Here, the front may be an area including data acquired by a camera facing forward.

According to another embodiment of the present disclosure, projection may be performed using a panoramic projection scheme. The projection processor may perform projection of 360-degree video data using the panoramic projection scheme. FIG. 9B(f) may show the panoramic projection scheme. When the panoramic projection scheme is used, the above-described projection processor may project, onto a 2D image, only a side surface of the 360-degree video data on a spherical surface, as shown in FIG. 9B(f). This may be the same as in the case where the top and bottom are not present in the cylindrical projection scheme.

According to another embodiment of the present disclosure, projection may be performed without stitching. FIG. 9B(g) may show a case where projection is performed without stitching. When projection is performed without stitching, the above-described projection processor may project 360-degree video data onto a 2D image as shown in FIG. 9B(g). In this case, stitching may be skipped, and each image acquired by the camera may be projected directly onto the 2D image.

Referring to FIG. 9B(g), two images may be projected onto a 2D image without stitching. Each image may be a fisheye image acquired through each sensor in a spherical camera. As described above, the receiving side may stitch the image data acquired from the camera sensors, and map the stitched image data onto a spherical surface to render a spherical video, that is, a 360-degree video.

Distortion may occur due to the characteristics of a camera and a lens for 360-degree video. In this case, the 360-degree video transmission apparatus and the 360-degree video reception apparatus may correct and process the distortion of the 360-degree video to improve image quality or the like. For example, the 360-degree video transmission apparatus/360-degree video reception apparatus may correct the distortion of the 360-degree video and project the video onto a 2D image. Alternatively, the 360-degree video transmission apparatus/360-degree video reception apparatus may correct the distortion in the stitching process and/or rendering process for the 360-degree video.

To correct the distortion of the 360-degree video, information about the camera and/or lens for the 360-degree video is needed. Since the characteristics may differ among the cameras and/or lenses, correction may be performed in consideration of distortion occurring according to the characteristics.

Accordingly, the present disclosure proposes a method of defining and signaling camera lens information about camera and lens parameters. According to an embodiment, the camera lens information may be delivered in the form of metadata of a video codec. It may be delivered in an SEI message of a video codec, such as High Efficiency Video Coding (HEVC) or Versatile Video Coding (VVC), or may be delivered in the form of VPS, SPS, or PPS. According to an embodiment, the camera lens information may be delivered through a digital wired/wireless interface, a system level file format, or the like.

For example, the camera lens information may be represented in an SEI message as shown in the table below.

TABLE 1

| sei payload( payloadType, payloadSize ) { | **Descriptor** |
|---|---|
| if( nal unit type = = PREFIX SEI NUT ) | |
| if( payloadType == 0) | |
| buffering period( payloadSize ) | |
| ... | |
| else if( payloadType = = 182 ) | |
| camera lens information( payloadSize ) | |
| else if( payloadType = = 183 ) | |
| supplemental camera lens information( payloadSize ) | |
| ... | |
| else | |
| reserved sei message( payloadSize ) | |
| if( more data in payload( ) ) { | |
| if( payload extension present( ) ) | |
| **reserved payload extension data** | u(v) |
| **payload bit equal to one** /* equal to 1 */ | f(1) |
| while( !byte aligned( ) ) | |
| **payload bit equal to zero** /* equal to 0 */ | f(1) |
| } | |
| } | |

Referring to Table 1, the SEI message may include camera_lens_information corresponding to the camera lens information and/or supplemental_camera_lens_information corresponding to supplemental camera lens information. Camera_lens_information may be represented as a camera lens information SEI message, and supplemental_camera_lens_information may be represented as a supplemental camera lens information SEI message.

Camera_lens_information may be derived as shown in the table below.

TABLE 2

| camera lens information ( payloadSize ) { | Descriptor |
|---|---|
| **camera lens info id** | ue(v) |
| **camera lens info cancel flag** | u(1) |
| if( !camera lens info cancel flag) { | |
| **camera lens info persistence flag** | u(1) |
| **supplemental info present flag** | u(1) |
| **view dimension idc flag** | u(1) |
| if( view dimension idc flag) | |
| **view dimension idc** | u(3) |
| **num circular images minusl** | u(8) |
| for( i = 0 ; i <= num circular images minus1; i++ ) { | |
| **camera lens info present flag**[ i ] | u(1) |
| if( camera lens info present flag[ i ] ) { | |
| **scene radius flag**[ i ] | u(1) |
| **camera center offset flag**[ i ] | u(1) |
| **camera rotation flag**[ i ] | u(1) |
| **lens distortion correction flag**[ i ] | u(1) |
| } | |
| **circular image center x**[ i ] | u(32) |
| **circular image center y**[ i ] | u(32) |
| **rect region top**[ i ] | u(32) |
| **rect region left**[ i ] | u(32) |
| **rect region width**[ i ] | u(32) |
| **rect region height**[ i ] | u(32) |
| **full radius**[ i ] | u(32) |
| if( scene radius flag[ i ] ) | |
| **scene radius**[ i ] | u(32) |
| if( camera rotation flag[ i ] ) { | |
| **camera center azimuth**[ i ] | i(32) |
| **camera center elevation**[ i ] | i(32) |
| **camera center tilt**[ i ] | i(32) |
| } | |
| if( camera center offset flag[ i ] ) { | |
| **camera center offset x**[ i ] | u(32) |
| **camera center offset y**[ i ] | u(32) |
| **camera center offset z**[ i ] | u(32) |

(continued)

| | |
|---|---|
| } | |
| **field of view**[ i ] | u(32) |
| **lens projection type**[ i ] | u(8) |
| if( lens distortion correction flag[ i ] ) { | |
| **num polynomial coefs distortion**[ i ] | u(16) |
| for( j = 0 ; j < num polynomial coefs distortion[ i ]; j++ ) { | |
| **distortion angle**[ i ][ j ] | u(16) |
| **num polynomial coefs distortion**[ i ][ j ] | u(16) |
| for( k = 0; k < num_polynomial_coefs_distortion[ i ][ j ]; k++ ) | |
| **polynomial coef k distortion**[ i ][ j ][ k ] } | u(32) |
| } | |
| **redial distortion type**[ i ] | u(8) |
| } | |
| } | |
| } | |
| } | |

Referring to Table 2, the camera_lens_information may include a camera_lens_info_id field, and/or a camera_lens_info_cancel_flag field.

The camera_lens_info_id field may indicate an identifier for identifying the purpose of camera lens information. For example, the value of the camera_lens_info_id field may indicate a use case of the camera lens information of the SEI message. Alternatively, the value of the camera_lens_info_id field may be used to support receiver performance. Alternatively, the value of the camera_lens_info_id field may indicate a sub-picture that may be composed of a single image. For example, the single image may be a sphere image or a panoramic image.

As an example, when one or more pieces of camera lens information contain the camera_lens_info_id field having the same value, the fields included in the multiple pieces of camera lens information may be the same. There may be multiple pieces of camera lens information containing the camera_lens_info_id fields having different values. In this case, the camera_lens_info_id fields may indicate that the multiple pieces of camera lens information are for different purposes, or that cascading of correction or projection is sequentially applied based on the camera lens information. Here, the order may be specified according to the application program. The value of the camera_lens_info_id field may be in the range of 0 to 232-2.

The camera_lens_info_cancel_flag field may indicate whether persistence of the previous camera lens information before the camera lens information is canceled according to an output order applied to the current layer. For example, when the value of the camera_lens_info_cancel_flag field is 1, the camera_lens_info_cancel_flag field may indicate that persistence of the previous camera lens information before the camera lens information is canceled. When the value of the camera_lens_info_cancel_flag field is 0, the camera_lens_info_cancel_flag field may indicate that persistence of the previous camera lens information before the camera lens information is not canceled.

Referring to Table 2, camera_lens_information may include a camera_lens_info_persistence_flag field, a supplemental_info_present_flag field, a view_dimension_idc_flag field, and/or a num_circular_images_minus1 field.

The camera_lens_info_persistence_flag field may indicate persistence of the camera lens information SEI message for the current layer. For example, when the value of the camera_lens_info_persistence_flag field is 0, the camera lens information may be applied only to the current decoded picture. When the value of the camera_lens_info_persistence_flag field is 1, the camera lens information may be maintained until any one of the conditions described below is satisfied according to the output order in the current layer. That is, the camera lens information may be applied until any one of the conditions described below is satisfied according to the output order in the current layer.

The conditions are as follows:

- a new CLVS of the current layer starts;
- the bitstream ends; and
- the picture picB of the current layer of an access unit including camera lens information applicable to the current layer is output, and PicOrderCnt (picB) is greater than PicOrderCnt (picA).

Here, picA may represent the current picture, and PicOrderCnt (picB) may indicate the value of PicOrderCntVal of picB immediately after an invocation of the decoding process for the picture order count of picB. PicOrderCnt (picA) may indicate the value of PicOrderCntVal of picA immediately after an invocation of the decoding process for the picture order count of picA.

The supplemental_info_present_flag field may indicate whether supplemental information for the camera lens information is present outside the SEI message containing the camera lens information. For example, when the value of the supplemental_info_present_flag field is 1, the supplemental_info_present_flag field may indicate that the supplemental information for the camera lens information is included in camera lens information or supplemental information for a camera_lens_info_id field having a different value from the camera_lens_info_id field of the camera lens information. When the value of the supplemental_info_present_flag field is 0, the supplemental_info_present_flag field may indicate that there is no supplemental information for the camera lens information.

The view_dimension_idc_flag field may indicate whether a view_dimension_idc field is present in the camera lens information. For example, when the value of the view_dimension_idc_flag field is 1, the view_dimension_idc_flag field may indicate that a view_dimension_idc field is present in the camera lens information. When the value of the view_dimension_idc_flag field is 1, the view_dimension_idc_flag field may indicate that the view_dimension_idc field is absent from the camera lens information.

The view_dimension_idc field may indicate the alignment and viewing direction of fisheye lenses. For example, when the value of the view_dimension_idc field is 0, the view_dimension_idc field may indicate that the value of a num_circular_images field is 2, that the values of a camera_center_elevation field, a camera_center_tilt field, a camera_center_offset_x field, a camera_center_offset_y field, and a camera_center_offset_z field have values causing circular images to have aligned optical axes and face in opposite directions, and that the sum of the values of a field_of_view field is greater than or equal to $360*2^{16}$. Here, the num_circular_images field may indicate the number of circular images.

For example, when the value of the view_dimension_idc field is 1, the view_dimension_idc field may indicate that the value of the num_circular_images field is 2, and that the values of the camera_center_eltation field, the camera_center_tilt field, the camera_center_offset_x field, the camera_center_offset_y field, and the camera_center_offset_z field have values causing the circular images to have parallel optical axes orthogonal to a line intersecting the camera center points, and that the i-th camera is a left view when i is 0. That is, when the value of the view_dimension_idc field is 1, the 0-th camera may represent a camera for the left view.

For example, when the value of the view_dimension_idc field is 2, the view_dimension_idc field may indicate that the value of the num_circular_images field is 2, that the camera_center_eltation field, the camera_center_tilt field, the camera_center_offset_x field, the camera_center_offset_y field, and the camera_center_offset_z field have values causing the circular images to have parallel optical axes orthogonal to a line intersecting the camera center points, and that the i-th camera is a right view when i is 0. That is, when the value of the view_dimension_idc field is 2, the 0-th camera may represent a camera for the right view.

For example, when the value of the view_dimension_idc field is 7, the view_dimension_idc field may indicate that additional constraints on the syntax elements in the omnidirectional fisheye video SEI message are not implied.

For the view_dimension_idc field, the values from 3 to 6 are reserved for future use.

A value obtained by adding 1 to the value of the num_circular_images_minus1 field may indicate the number of circular images of a coded picture, namely the the current picture.

Referring to Table 2, the camera_lens_information may include a camera_lens_info_present_flag[i] field, a scene_radius_flag[i] field, a camera_center_offset_flag[i] field, a camera_rotation_flag[i] field, a lens_distortion_correction_flag[i] field, a circular_image_center_x[i] field, a circular_image_center_y[i] field, a rect_region_top[i] field, a rect_region_left[i] field, a rect_region_width[i] field, a rect_region_height[i] field, a full_radius[i] field, a scene_radius[i] field, a camera_center_azimuth[i] field, a camera_center_elevation[i] field, a camera_center_tilt[i] field, a camera_center_offset_x[i] field, a camera_center_offset_y[i] field, a camera_center_offset_z[i] field, a field_of_view[i] field, a lens_projection_type[i] field, a num_polynomial_coefs_distortion[i] field, a distortion_angle[i][j] field, a num_polynomial_coefs_distortion[i][j] field, a polynomial_coef_k_distortion[i][j][k] field, and/or a radial_distortion_type[i] field.

The camera_lens_info_present_flag[i] field may indicate whether a scene_radius_flag[i] field, a camera_center_offset_flag[i] field, a camera_rotation_flag[i] field, and a lens_distortion_correction_flag[i] field for the i-th circular image are present in the camera lens information. For example, when the value of the camera_lens_info_present_flag[i] field is 1, the camera_lens_info_present_flag[i] field may indicate that the scene_radius_flag[i] field, the camera_center_offset_flag[i] field, the camera_rotation_flag[i] field, and the lens_distortion_correction_flag[i] field for the i-th circular image are present in the camera lens information. When the value of the camera_lens_info_present_flag[i] field is 0, the camera_lens_info_present_flag[i] field may indicate that the scene_radius_flag[i] field, the camera_center_offset_flag[i] field, the camera_rotation_flag[i] field, and the lens_distortion_correction_flag[i] field for the i-th circular image are absent from the camera lens information.

The scene_radius_flag[i] field, the camera_center_offset_flag[i] field, the camera_rotation_flag[i] field, and the lens_distortion_correction_flag[i] field may indicate whether there are fields for each field in the camera lens information.

Specifically, the scene_radius_flag[i] field may indicate whether information about a circular region for the i-th circular image is present in the camera lens information. In other words, the scene_radius_flag[i] field may indicate whether the scene_radius[i] field for the i-th circular image is present in the camera lens information. Here, the circular region may represent a region where an obstacle such as a camera body is seen in the i-th circular image. For example, when the value of the scene_radius_flag[i] field is 1, the scene_radius_flag[i] field may indicate that the scene_radius[i] field for the i-th circular image is present in the camera lens information. When the value of the scene_radius_flag[i] field is 0, the scene_radius_flag[i] field may indicate that the scene_radius[i] field for the i-th circular image is absent from the camera lens information. The scene_radius[i] field will be described in detail later.

The camera_center_offset_flag[i] field may indicate whether offset information about a focal center of a camera lens for the i-th circular image is present in the camera lens information. In other words, the camera_center_offset_flag[i] field may indicate whether a camera_center_offset_x[i] field, a camera_center_offset_y[i] field, and a camera_center_offset_z[i] field for the i-th circular image are present in the camera lens information. For example, when the value of the camera_center_offset_flag[i] field is 1, the camera_center_offset_flag[i] field may indicate that the camera_center_offset_x[i] field, the camera_center_offset_y[i] field, and the camera_center_offset_z[i] field for the i-th circular image are present in the camera lens information. When the value of the camera_center_offset_flag[i] field is 0, the camera_center_offset_flag[i] field may indicate that the camera_center_offset_x[i] field, the camera_center_offset_y[i] field, and the camera_center_offset_z[i] field for the i-th circular image are absent from the camera lens information. The camera_center_offset_x[i] field, the camera_center_offset_y[i] field, and the camera_center_offset_z[i] field will be described in detail later.

The camera_rotation_flag[i] field may indicate whether information about spherical coordinates of a position in an output image corresponding to a center point of the i-th circular image is present in the camera lens information. In other words, the camera_rotation_flag[i] field may indicate whether the camera_center_azimuth[i] field, the camera_center_elevation[i] field, and the camera_center_tilt[i] field for the i-th circular image are present in the camera lens information. For example, when the value of the camera_rotation_flag[i] field is 1, the camera_rotation_flag[i] field may indicate that the camera_center_azimuth[i] field, the camera_center_elevation[i] field, and the camera_center_tilt[i] field for the i-th circular image are present in the camera lens information. When the value of the camera_rotation_flag[i] field is 0, the camera_rotation_flag[i] field may indicate that the camera_center_azimuth[i] field, the camera_center_elevation[i] field, and the camera_center_tilt[i] field for the i-th circular image are absent from the camera lens information. The camera_center_azimuth[i] field, the camera_center_elevation[i] field, and the camera_center_tilt[i] field will be described in detail later.

The lens_distortion_correction_flag[i] field may indicate whether camera lens distortion related information about the i-th circular image is present in the camera lens information. In other words, the lens_distortion_correction_flag[i] field may indicate whether a num_polynomial_coefs_distortion[i] field, a distortion_angle[i][j] field, a num_polynomial_coefs_distortion[i][j] field, and a polynomial_coef_k_distortion[i][j][k] field for the i-th circular image are present in the camera lens information. For example, when the value of the lens_distortion_correction_flag[i] field is 1, the lens_distortion_correction_flag[i] field may indicate that the num_polynomial_coefs_distortion[i] field, the distortion_angle[i][j] field, the num_polynomial_coefs_distortion[i][j] field, and the polynomial_coef_k_distortion[i][j][k] field for the i-th circular imag are present in the camera lens information. When the value of the lens_distortion_correction_flag[i] field is 0, the lens_distortion_correction_flag[i] field may indicate that the num_polynomial_coefs_distortion[i] field, the distortion_angle[i][j] field, the num_polynomial_coefs_distortion[i][j] field, and the polynomial_coef_k_distortion[i][j][k] field for the i-th circular imag are are absent from the camera lens information. The num_polynomial_coefs_distortion[i] field, the distortion_angle[i][j] field, the num_polynomial_coefs_distortion[i][j] field, and the polynomial_coef_k_distortion[i][j][k] field will be described in detail later.

The circular_image_center_x[i] field and the circular_image center_y[i] field may indicate a center point of the i-th circular image of a coded picture, namely the current picture. In other words, the circular_image_center_x[i] field may indicate the horizontal coordinate (x component) of the center point of the i-th circular image of the current picture, and the circular_image_center_y[i] field may indicate the i-th circular of the current picture may indicate the vertical coordinate (y component) of the center point of of the i-th circular image of the current picture. Here, the circular_image_center_x[i] field and the circular_image_center_y[i] field may indicate the horizontal and vertical coordinates of the center point in units of $2^{-16}$ luma samples. The values of the circular_image_center_x[i] field and the circular_image_center_y[i] field may be in a range of 0 to $65536*2^{16}$ - 1 (i.e., 4294967295).

The rect_region_top[i] field, the rect_region_left[i] field, the rect_region_width[i] field, and the rect_region_height[i] field may indicate the top left position (the position of the top left point), the width and the height of the i-th rectangular region including the i-th circular image. The rect_region_top[i] field, the rect_region_left[i] field, the rect_region_width[i] field, and the rect_region_height[i] field may indicate the top left position (the position of the top left point), the width and the height of the i-th rectangular region in units of luma samples.

The full_radius[i] field may indicate the radius of the i-th circular image. The radius of the i-th circular image may be defined as a length from the center point of the i-th circular image to the outermost sample boundary. The center point may be indicated by the circular image_center_x[i] field and the circular image_center_y[i] field in units of $2^{-16}$ luma samples. In addition, the radius of the i-th circular image may correspond to the maximum field of view of the i-th lens for the i-th circular image indicated by the field_of_view[i] field. Here, the i-th lens may be a fisheye lens. The value of the full_radius[i] field may be in the range of 0 to $65536*2^{16}$ - 1 (i.e., 4294967295).

The actual sample region of the i-th circular image may be defined as a region corresponding to the inner intersection of a rectangular region, which is derived based on the rect_region_top[i] field, the rect_region_left[i] field, the rect_region_width[i] field, and the rect_region_height[i] field, and a circular image derived based on the circular_image-ge_center_x[i] field, the circular_image_center_y[i] field, and the full_radius[i] field.

The scene_radius[i] field may indicate the radius of a circular region in the i-th circular image. Here, the circular region may represent a region where an obstacle such as a camera body is not seen in the i-th circular image. The radius of the circular region may be indicated by the scene_radius[i] field in units of $2^{-16}$ luma samples. In addition, the value of the scene_radius[i] field may be less than or equal to the value of the full_radius[i] field, and may be in a range of 0 to $65536*2^{16}$ - 1 (i.e., 4294967295). The circular region may be a region proposed by a content provider so as to be used in the stitching process.

The camera_center_azimuth[i] field and the camera_center_elevation[i] field may indicate spherical coordinates of a position in an output image corresponding to the center point of the i-th circular image. In other words, the camera_center_azimuth[i] field may indicate an azimuth angle of a position in an output image corresponding to the center point of the i-th circular image, and the camera_center_elevation[i] field may indicate an elevation angle of the position in the output image corresponding to the center point of the i-th circular image. Here, the camera_center_azimuth[i] field and the camera_center_elevation[i] field may indicate the azimuth angle and the elevation angle of the position in the output image corresponding to the center point in units of $2^{-16}$ degrees. The value of the camera_center_azimuth[i] field may be in the range of $-180*2^{16}$ (i.e., -11796480) to $180*2^{16}$ - 1 (i.e., 11796479). In addition, the value of the camera_center_elevation[i] field may be in the range of $-90*2^{16}$ (i.e., -5898240) to $90*2^{16}$ (i.e., 5898240).

The camera_center_tilt[i] field may indicate a tilt angle of a position in an output image corresponding to the center point of the i-th circular image. Here, the camera_center_tilt[i] field may indicate the tilt angle of the position in the output image corresponding to the center point in units of $2^{-16}$ degrees. The value of the camera_center_tilt[i] field may be in the range of $-180*2^{16}$ (i.e., -11796480) to $180*2^{16}$ - 1 (i.e., 11796479).

The camera_center_offset_x[i] field, the camera_center_offset_y[i] field, and the camera_center_offset_z[i] field may indicate the offset of the focal center of the camera lens for the i-th circular image. In other words, the camera_center_offset_x[i] field may indicate the x offset of the focal center of the camera lens for the i-th circular image, the camera_center_offset_y[i] field may indicate the y offset of the focal center of the camera lens for the i-th circular image, and the camera_center_offset_z[i] field may indicate the z offset of the focal center of the camera lens for the i-th circular image,. Here, the camera_center_offset_x[i] field, the camera_center_offset_y[i] field, and the camera_center_offset_z[i] field may indicate the x offset, y offset, and z offset of the focal center of the camera lens in units of $2^{-16}$ millimeters. The camera lens for the i-th circular image may be a fisheye lens. The values of the camera_center_offset_x[i] field, the camera_center_offset_y[i] field, and the camera_center_offset_z[i] field may be in the range of 0 to $65536*2^{16}$ - 1 (i.e., 4294967295).

The field_of_view[i] field may indicate a spherical domain coverage of the i-th circular image of a coded picture, namely the current picture. Here, the field_of_view[i] field may indicate the spherical domain coverage in units of $2^{-16}$ degrees. The value of the field_of_view[i] field may be in the range of 0 to $360*2^{16}$.

The lens_projection_type[i] field may indicate the type of lens projection for the i-th circular image. Here, the lens_projection_type[i] field may be represented as a lens_type[i] field. For example, when the value of the lens_projection_type[i] field is 0, the lens_projection_type[i] field may indicate that the type of lens projection for the i-th circular image is not specified. When the value of the lens_projection_type[i] field is 1, the lens_projection_type[i] field may indicate that the type of lens projection for the i-th circular image is rectilinear projection. When the value of the lens_projection_type[i] field is 2, the lens_projection_type[i] field may indicate that the type of the lens projection for the i-th circular image is stereographic projection. When the value of the lens_projection_type[i] field is 3, the lens_projection_type[i] field may indicate that the type of the lens projection for the i-th circular image is equidistance projection. When the value of the lens_projection_type[i] field is 4, the lens_projection_type[i] field may indicate that the type of lens projection for the i-th circular image is equisolid projection. When the value of the lens_projection_type[i] field is 5, the lens_projection_type[i] field may indicate that the type of lens projection for the i-th circular image is orthographic projection. When the value of the lens_projection_type[i] field is 255, the lens_projection_type[i] field may indicate that the type of the lens projection for the i-th circular image is angular polynomial projection. The values from 6 to 254 for the lens_projection_type[i] field are reserved for future use.

The distortion_angle[i][j] field may indicate an angular value for describing the j-th polynomial function of the i-th circular image. That is, the distortion_angle[i][j] field may indicate an angle value to which the j-th polynomial function of the i-th circular image is applied. Here, the distortion_angle[i][j] field may indicate the angle value in units of $2^{-7}$ degrees. The value of the distortion_angle[i][j] field may be in the range of 0 to $360*2^7$ -1.

The num_polynomial_coefs_distortion[i][j] field may indicate the number of polynomial coefficients for the i-th circular image. In other words, the num_polynomial_coefs_distortion[i][j] field may indicate the number of polynomial functions for the i-th circular image. The process of correcting distortion through the polynomial function may be referred to as angular curve function transformation.

The polynomial_coef_k_distortion[i][j][k] field indicate the value of the k-th polynomial coefficient of the (j+1)-th angular curve function transformation of the radial distance between a luma sample and the center point in the i-th circular image. The value of the k-th polynomial coefficient may be a value for transforming an angle of a normalized circle to an angle between a vector corresponding to a luma sample and the center point. The center point may be represented by spherical coordinates of an origin corresponding to a focal point of the camera lens for the i-th circular image. The value of the polynomial_coef_k_distortion[i][j][k] field may be in the range of 0 to $256*2^{24}$ -1 (i.e., 4294967295).

The radial_distortion_type[i] field may indicate the type of lens radial distortion for the i-th circular image. For example, when the value of the radial_distortion_type[i] field is 0, the radial_distortion_type[i] field may indicate that the type of the lens radial distortion for the i-th circular image is not specified. When the value of the radial_distortion_type[i] field is 1, the radial_distortion_type[i] field may indicate that the type of the lens radial distortion for the i-th circular image is barrel distortion. When the value of the radial_distortion_type[i] field is 2, the radial_distortion_type[i] field may indicate that the type of the lens radial distortion for the i-th circular image is pincushion distortion. When the value of the radial_distortion_type[i] field is 3, the radial_distortion_type[i] field may indicate that the type of the lens radial distortion for the i-th circular image is mustache distortion. Values from 4 to 254 for the radial_distortion_type[i] field are reserved for future use.

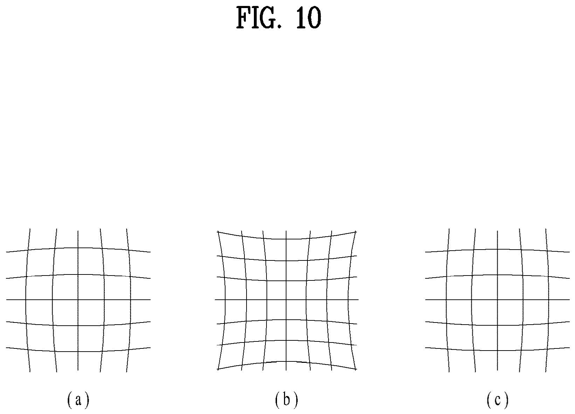

FIG. 10 exemplarily shows various types of radial distortion. Different types of radial distortion may occur in a circular image depending on the lens used for capture, and FIG. 10 may show various types of radial distortion. FIG. 10(a) may show barrel distortion, FIG. 10(b) may show pincushion distortion, and FIG. 10(c) may show mustache distortion.

The radial distortion of the circular image may be corrected based on the Brown's distortion model or the Brow-Conrady model. Further, based on the Brow-Conrady model, the radial distortion and the tangential distortion, which is caused by imperfect alignment of physical elements of the lens, may be corrected. The tangential distortion may also be referred to as decentering distortion.

The process of correcting the radial distortion of the circular image may be derived as the following equation.

### Equation 5

$$x_u = x_d + (x_d - x_c)(K_1 r^2 + K_2 r^4 + \cdots) + (P_1(r^2 + 2(x_d - x_c)^2) + 2P_2(x_d - x_c)(y_d - y_c))(1 + P_3 r^2 + P_4 r^4 \cdots)$$

$$y_u = y_d + (y_d - y_c)(K_1 r^2 + K_2 r^4 + \cdots) + (2P_1(x_d - x_c)(y_d - y_c) + P_2(r^2 + 2(y_d - y_c)^2))(1 + P_3 r^2 + P_4 r^4 \cdots),$$

Through the process of correcting the distortion, a sample of coordinates $(x_d, y_d)$ of the circular image may be shifted to coordinates $(x_u, y_u)$, which is derived based on the equation. Thereby, distortion of the circular image may be eliminated.

Here, r may denote a distance between a distorted image point and a distortion center, and $x_d$ and $y_d$ may denote the x and y components of the distorted image point of a picture onto which a 360-degree video is projected using a designated lens. Here, $x_u$ and $y_u$ may denote the x and y components of an undistorted image point of a picture onto which the 360-degree video is projected using an ideal pinhole camera. In addition, $x_c$ and $y_c$ may denote the x and y components of the distortion center. The distortion center may be assumed to be a principal point. $K_n$ may denote the n-th radial distortion coefficient, and $P_n$ may denote the n-th tangential distortion coefficient. The radial distortion coefficient and the tangential distortion coefficient may be derived based on the type of radial distortion of the circular image.

Here, r may be derived by the following equation.

### Equation 2

$$r = \sqrt{(x_d - x_c)^2 + (y_d - y_c)^2}$$

The process of transforming a sample position of the circular image to sphere coordinates for global coordinate axes will be described later. In the transformation process which will be described later, i may be sequentially applied fdrom 0 to the value of the num_circular_images_minus1 field.

Inputs of the transformation process may be as follows:

- Sample position (x, y) in units of luma samples;

- Center point position ($x_c$, $y_c$) of the i-th circular image derived based on the circular_image_center_x[i] field and the circular_image_center_y[i] field in units of $2^{-16}$ luma samples, and radius $r_c$ of the i-th circular image derived based on the full_radius[i] field;
- $\theta_v$ derived based on the field_of_view[i] field in units of $2^{-16}$ degrees;
- Rotation parameters $\alpha_c$, $\beta_c$, and $\gamma_c$ derived based on the camera_center_azimuth[i] field, the camera_center_elevation[i] field, and the camera_center_tilt[i] field in units of $2^{-16}$ degrees; and

Outputs of the transformation process may be as follows:

- Sphere coordinate position ($\varphi$, $\theta$) for global coordinate axes for a sample position (x, y);

Specifically, for example, when the value of the lens_projection_type[i] field is 3, namely, when the type of the lens projection for the i-th circular image is fisheye projection (or equidistance projection), the process of transforming the sample position in the circular image into a position in the sphere coordinate system may be performed as shown in the following table. Here, the equation for $\varphi$' may be derived based on the lens_projection_type[i] field, the transformation process may be represented as a process of mapping the i-th circular image to sphere coordinates.

TABLE 3

$$\phi' = ( \mathrm{Sqrt}( ( x - x_c * 2^{-16})^2 + ( y - y_c * 2^{-16} )^2 ) \div (r_c * 2^{-16} ) ) * ( \theta_v * 2^{-16} * \pi \div 180 ) \div 2$$
$$\theta' = \mathrm{Atan2}( y - y_c * 2^{-16}, x - x_c * 2^{-16} )$$
$$x_1 = \mathrm{Cos}(\phi' )$$
$$y_1 = \mathrm{Sin}(\phi') * \mathrm{Cos}(\theta')$$
$$z, = \mathrm{Sin}(\phi') * \mathrm{Sin}(\theta')$$
$$\alpha = ( \alpha_c * 2^{-16} ) * \pi \div 180$$
$$\beta = ( \beta_c * 2^{-16} ) * \pi \div 180$$
$$\gamma = ( \gamma_c * 2^{-16} ) * \pi \div 180$$
$$x_2 = \mathrm{Cos}(\beta) * \mathrm{Cos}(\gamma) * x_1 - \mathrm{Cos}(\beta) * \mathrm{Sin}(\gamma) * y_1 + \mathrm{Sin}(\beta) * z_1$$
$$y_2 = ( \mathrm{Cos}(\alpha) * \mathrm{Sin}(\gamma) + \mathrm{Sin}(\alpha) * \mathrm{Sin}(\beta) * \mathrm{Cos}(\gamma) ) * x_1 + ( \mathrm{Cos}(\alpha) * \mathrm{Cos}(\gamma) - \mathrm{Sin}(\alpha) * \mathrm{Sin}(\beta) * \mathrm{Sin}(\gamma) ) * y_1 - \mathrm{Sin}(\alpha) * \mathrm{Cos}(\beta) * z_1$$
$$z_2 = ( \mathrm{Sin}(\alpha) * \mathrm{Sin}(\gamma) - \mathrm{Cos}(\alpha) * \mathrm{Sin}(\beta) * \mathrm{Cos}(\gamma) ) * x_1 + ( \mathrm{Sin}(\alpha) * \mathrm{Cos}(\gamma) + \mathrm{Cos}(\alpha) * \mathrm{Sin}(\beta) * \mathrm{Sin}(\gamma) ) * y_1 + \mathrm{Cos}(\alpha) * \mathrm{Cos}(\beta) * z_1$$
$$\phi = \mathrm{Atan2}( y_2, x_2 ) * 180 \div \pi$$
$$\theta = \mathrm{Asin}( z_2 ) * 180 \div \pi$$

Referring to Table 1 above, the SEI message may include supplemental_camera_lens_information corresponding to the supplemental camera lens information.

The supplemental_camera_lens_information may be derived as shown in the table below.

TABLE 4

| supplemental_camera_lens_information ( payloadSize ) { | Descriptor |
|---|---|
| num_circular_images | u(8) |
| for(i-0, i< num_circular_images; i++) { | |
| image_flip[ i ] | u(2) |
| image_scale_axis_angle[ i ] | u(32) |
| image_scale_x[ i ] | u(32) |
| image_scale_y[ i ] | u(32) |
| num_angle_for_displaying_fov[ i ] | u(16) |
| for(j=0; j<num_angle_for_displaying_fov[ i ]; j++) { | |
| displayed_fov[ i ][ j ] | u(32) |
| overlapped_fov[ i ][ j ] | u(32) |
| } | |

(continued)

| | |
|---|---|
| **num_local_fov_region**[ i ] | u(16) |
| for(j=0; i<num_local_fov_region[ i ]; j++) { | |
| **start_radius**[ i ][ j ] | u(32) |
| **end_radius**[ i ][ j ] | u(32) |
| **start_angle**[ i ][ j ] | i(32) |
| **end_angle**[ i ][ j ] | i(32) |
| **radius_delta**[ i ][ j ] | u(32) |
| **angle_delta**[ i ][ j ] | i(32) |
| for(k=0; k<= numRadius; k++ ) | |
| for(l=0; l<= numAngle; l++ ) | |
| **local_fov_weight**[ i ][ j ][ k ][ l ] | u(32) |
| } | |
| **num_polynomial_coefficients_lsc**[ i ] | u(16) |
| for(j=0; i< num_polynomial_coefficients_lsc[ i ]; j++) { | |
| **polynomial_coefficient_K_lsc_R**[ i ][ j ] | u(32) |
| **polynomial_coefficient_K_lsc_G**[i ][ j ] | u(32) |
| **polynomial_coefficient_K_lsc_B**[ i ][ j ] | u(32) |
| } | |
| } | |
| **num_deadzones** | u(8) |
| for(i=0; i< num_deadzones; i++) { | |
| **deadzone_left_horizontal_offset**[ i ] | u(16) |
| **deadzone_top_vertical_offset**[ i ] | u(16) |
| **deadzone_width**[ i ] | u(16) |
| **deadzone_height**[ i ] | u(16) |
| } | |
| } | |

Referring to Table 4, the supplemental_camera_lens_information may include a num_circular_images field.

The num_circular_images field may indicate the number of circular images of a coded picture, namely the current picture to which the supplemental_camera_lens_information is applied. For example, the value of the num_circular_images field may be 2. Alternatively, the value of the num_circular_images field may be a non-zero value except 2.

Referring to Table 4, the information may include an image_flip[i] field, an image_scale_axis_angle[i] field, a image_scale_x[i] field, an image_scale_y[i] field, a num_angle_for_displaying_fov[i] field, a displayed_fov[i][j] field, a overlapped_fov[i][j] field, a num_local_fov_region[i] field, a start_radius[i][j] field, an end_radius[i][j] field, a start_angle[i][j] field, an end_angle[i][j] field, a radius_delta[i][j] field, an angle_delta[i][j] field, a local_fov_weight[i][j][k][l] field, a num_polynomial_coefficients_lsc[i] field, a polynomial_coefficient_K_lsc_R[i][j] field, a polynomial_coefficient_K_lsc_G[i][j] field, a polynomial_coefficient_K_lsc_B[i][j] field, a num_deadzones field, a deadzone_left_horizontal_offset[i] field, a deadzone_top_vertical_offset[i] field, a deadzone_width[i] field, and/or a deadzone_height[i] field.

The image_flip[i] field may indicate whether the i-th circular image is flipped and how it is flipped. Accordingly, the image_flip[i] field may indicate whether a reverse flipping operation should be applied to the i-th circular image in the stitching process and/or the rendering process. For example, when the value of the image_flip[i] field is 0, the image_flip[i] field may indicate that the i-th circular image is not flipped. When the value of the image_flip[i] field is 1, the image_flip[i] field may indicate that the i-th circular image is flipped vertically. When the value of the image_flip[i] field is 2, the image_flip[i] field may indicate that the i-th circular image is flipped horizontally. When the value of the image_flip[i] field is 3, the image_flip[i] field may indicate that the i-th circular image is flipped vertically and horizontally.

The image_scale_axis_angle[i] field, the image_scale_x[i] field, and the image_scale_y[i] field may indicate whether and how the size of the i-th circular image is scaled along a specific axis. The values of the image_scale_axis_angle[i] field, the image_scale_x[i] field, and the image_scale_y[i] field may be fixed-point 16. The image_scale_axis_angle[i] field, the image_scale_x[i] field, and the image_scale_y[i] field may be used to take into account natural errors in camera-mirror settings. The specific axis may be defined as a single angle indicated by the value of the image_scale_axis_angle[i] field. The unit of the single angle may be a degree. For example, when the single angle is 0, this may indicate that the horizontal vector may be perfectly horizontal, and the vertical vector may be perfectly vertical. The image_scale_x[i] field and the image_scale_y[i] field may indicate scaling. The image_scale_axis_angle[i] field, the image_scale_x[i] field, and the image_scale_y[i] field may be referred to as affine parameters and may satisfy the following equation.

<div align="center">Equation 7</div>

$$\begin{bmatrix} u \\ v \end{bmatrix} = \begin{bmatrix} c & d \\ e & 1 \end{bmatrix} \begin{bmatrix} u_N \\ v_N \end{bmatrix} + \begin{bmatrix} c_x \\ c_y \end{bmatrix}$$

Equation 7 is a mathematical expression representing the relationship between actual sample coordinates (u, v) and ideal sample coordinates ($u_N$, $v_N$), where $c_x$ and $c_y$ denote the values of the image_center_x[i] field and the image_center_y[i] field, respectively. In addition, c, d, and e denote the values of the image_scale_x[i] field, the image_scale_axis_angle[i] field, and the image_scale_y[i] field, respectively.

The num_angle_for_displaying_fov[i] field may indicate the number of angles that define a displayed region and an overlapped region. Based on the value of the num_angle_for_displaying_fov[i] field, values of the displayed_fov[i][j] field and the overlapped_fov[i][j] field may be defined at constant intervals. The values of the displayed_fov[i][j] field, and overlapped_fov[i][j] field may be defined to start at 12 o'clock and increase clockwise.

The displayed_fov[i][j] field may indicate a region recommended to be displayed without blending with an adjacent circular image in the i-th circular image.

The overlapped_fov[i][j] field may indicate a field of view (FOV) in which the i-th circular image overlaps with an adjacent circular image on a spherical surface. The FOV indicated by the overlapped_fov[i][j] field may represent one of the region of an adjacent circular image and the FOV that is to be displayed, or a region recommended to be displayed by blending with the adjacent circular image.

The num_local_fov_region[i] field may indicate the number of local fitting regions of the i-th circular image that have different fields of view (FOV).

The start_radius[i][j] field, the end_radius[i][j] field, the start_angle[i][j] field, and the end_angle[i][j] field may indicate the j-th region for local fitting/warping. The local fitting/warping may indicate changing the actual FOV for displaying locally. The values of the start_radius[i][j] field, and the end_radius[i][j] field may be fixed-point 16. The start_radius[i][j] field may indicate the minimum radius value of the j-th region, and the end_radius[i][j] field may indicate the maximum radius value of the j-th region. The start_angle[i][j] field and the end_angle[i][j] field may indicate the minimum and maximum angular values that start at 12 o'clock of the j-th region and increase clockwise. Here, the start_angle[i][j] field and the end_angle[i][j] field may indicate the angle values in units of $2^{-16}$ degrees. The values of the start_angle[i][j] field and the end_angle[i][j] fields may be in the range of $-180*2^{16}$ to $180*2^{16}$ -1.

The radius_delta[i][j] field may indicate a delta radius value representing a different FOV for each radius. The radius_delta[i][j] field may be fixed-point 16.

The angle_delta[i][j] field may indicate a delta angle value for representing a different FOV for each angle. The start_angle[i][j] field and the angle_delta[i][j] field may indicate the delta angle value in units of $2^{-16}$ degrees.

The local_fov_weight[i][j][k][l] field may indicate a weighting value for the FOV of the position specified by the angle index i and the radius index j, that is, the FOV of the position derived based on the start_radius[i][j] field, the end_radius[i][j] field, the start_angle[i][j] field, and the end_angle[i][j] field. The value of the local_fov_weight[i][j][k][l] field may be in an 8.24 fixed point form. A positive value of the local_fov_weight[i][j][k][1] field may indicate expansion of the FOV, while a negative value of the local_fov_weight[i][j][k][1] field may indicate contraction of the FOV.

The num_polynomial_coefficients_lsc[i] field may indicate the number of polynomial coefficients of the lens shading compensation (LSC) parameters of the i-th circular image.

The polynomial_coefficient_K_lsc_R[i][j] field, the polynomial_coefficient_K_lsc_G[i][j] field, and the polynomial_coefficient_K_lsc_B[i][j] field may indicate LSC parameters for compensation for the shading artifact of a lens (e.g., a fisheye lens) that suppresses the color in the radial direction (shading compensation). The values of the polynomial_coefficient_K_lsc_R[i][j] field, the polynomial_coefficient_K_lsc_G[i][j] field, and the polynomial_coefficient_K_lsc_B[i][j] field may be in the 8.24 fixed point format. The compensating weight by which the original color is to be multiplied may be approximated by a curve function. The curve function representing the compensating weight may be derived using the following equation.

## Equation 8

$$w = \sum_{i=1}^{N} p_{i-1} \cdot r^{i-1}$$

Here, r may denote a normalized radius. In other words, r may denote the radius at the center of the i-th circular image normalized based on the full_radius[i] field.

P may denote an LSC parameter. Here, the polynomial_coefficient_K_lsc_R[i][j] field, the polynomial_coefficient_K_lsc_G[i][j] field, and the polynomial_coefficient_K_lsc_B[i][j] field may indicate an LSC parameter for red, an LSC parameter for green, and an LSC parameter for blue, respectively. In this case, a weighting factor for red, a weighting factor for green, and a weighting factor for blue may be calculated, respectively.

N may be derived as a value of the num_polynomial_coefficients_lsc[i] field. That is, N may indicate the number of polynomial coefficients of the LSC parameter of the i-th circular image.

Values of the displayed_fov[i][j] field and the overlapped_fov[i][j] field may be less than or equal to the value of the field_of_view[i] field. The value of the field_of_view[i] field may be determined by the physical property of each lens (e.g., fisheye lens), while the values of the displayed_fovl[i][j] field and the overlapped_fov[i][j] field may be determined by the configuration of multiple lenses. For example, when the value of the num_circular_images field is 2 and the two lenses are symmetrically positioned, the values of the displayed_fov[i][j] field and the overlapped_fov[i][j] field may be set to 180 and 190 by default, respectively. However, the values of the displayed_fov[i][j] field and the overlapped_fov[i][j] field may be changed depending on the configuration of the lens and characteristics of the 360-degree video content. For example, if the stitching quality with values of displayed_fov (e.g., 170 for the left camera lens and 190 for the right camera) and values of overlapped_fov (e.g., 185 for the left camera and 190 for the right camera) is better than the quality with the default values of displayed_fov and overlapped_fov (i.e., 180 and 190), or if the physical configuration of cameras is asymmetric, unequal values of the display_fov field and the overlapped_fov field may be derived. In addition, in the case of N (N> 2) fisheye images (i.e., circular images), the exact area of each fisheye image may not be specified by a single value of the displayed_fov field. That is, the displayed_fov field may vary according to the direction. Accordingly, in order to control N fisheye images, the num_angle_for_displaying_fov[i] field described above may be introduced. For example, when the value of the num_angle_for_displaying_fov[i] field is 12, the fisheye image may be divided into 12 sectors. The angle of each sector may be 30 degrees.

The num_deadzones[i] field may indicate the number of dead zones in a coded picture, namely the current picture. A dead zone may refer to a rectangular area containing unused samples of the current picture, that is, a rectangular area to which the 360-degree video is not mapped.

The deadzone_left_horizontal_offset[i] field and the deadzone_top_vertical_offset[i] field may indicate the top left position (the position of the top left point) of the corresponding dead zone. The deadzone_width[i] field may indicate the width of the dead zone, and the deadzone_height[i] field may indicate the height of the dead zone. To reduce the bit amount for the 360-degree video, all samples in the dead zone may be set to the same sample value. For example, all samples in the dead zone may be set to a sample value indicating black.

Camera intrinsic parameters, such as the focal length ($f_x$, $f_y$), the principal point ($c_x$, $c_y$), and the skew coefficient skew_c of the camera or lens, and camera extrinsic parameters, such as rotation and translation parameters, may also be defined in the camera lens information SEI message or supplemental camera lens information SEI message described above.

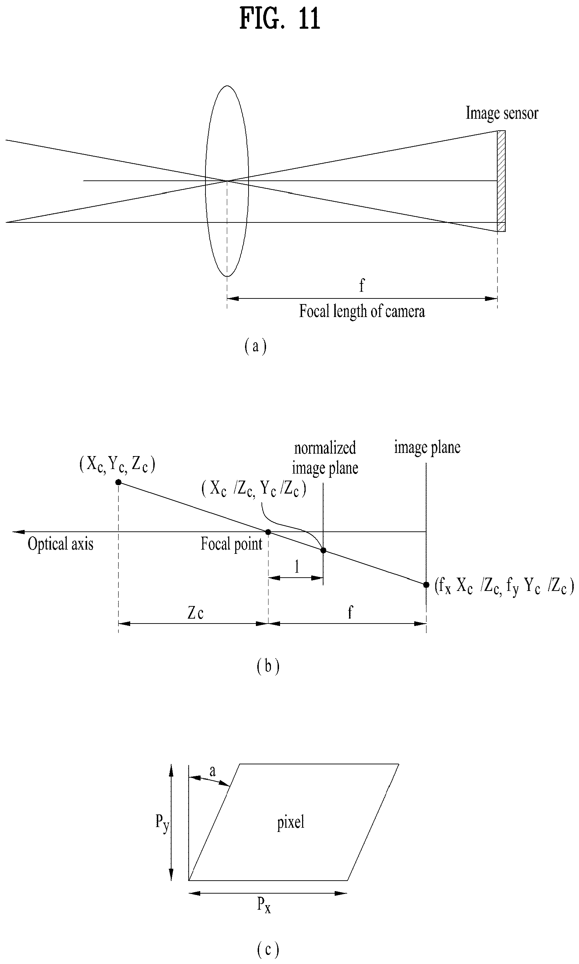

FIG. 11 illustrates an example of capturing a 360-degree video through a camera lens. Referring to FIGS. 11(a) and 11(b), a captured 360-degree video may be derived according to the focal length of the camera or lens. A sample at the coordinates (Xc, Yc, Zc) may be captured at a position (fxXc/Zc, fyYc/Zc) of the image plane, and the position of a standardized sample may be derived as (Xc/Zc, Yc/Zc) obtained by dividing the position of the image plane by the focal length. The standardized image plane may represent an image plane at a position at a focal length of 1 from the focal point of the camera or lens.

FIG. 11(c) may illustrate a sample of a 360-degree video captured obliquely at a specific angle. The specific angle representing the degree of obliqueness may be derived based on the skew coefficient skew_c described above. For example, the skew coefficient may be derived using the following equation.

## Equation 9

$$A = \begin{bmatrix} a & skew\_c & u \\ 0 & b & v \\ 0 & 0 & 1 \end{bmatrix}$$

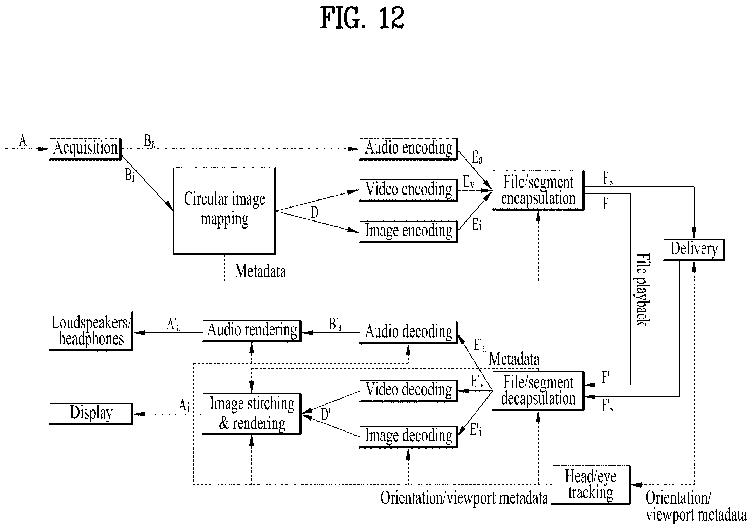

FIG. 12 exemplarily shows an overall architecture for providision of a 360 degree video performed based on camera lens information and/or supplemental camera lens information according to the present disclosure.

Initially, the 360-degree video transmission apparatus may acquire an image captured by a 360 camera.

Here, the 360 camera may refer to at least one (fisheye) camera or a camera having at least one (fisheye) lens and sensor.

The video processor of the 360-degree video transmission apparatus may map/pack circular images onto a picture. Thereafter, as described above, the video processor may encode the picture, and the metadata processor may generate 360-degree video data, signaling information about the circular images, camera lens information, and/or supplemental camera lens information. Thereafter, as described above, through a process such as file encapsulation, the 360-degree video data, the signaling information, the camera lens information, and/or the supplemental camera lens information may be transmitted to the receiving side.

As shown in the figure, operations such as stitching, projection and/or region-wise packing, and the like of the video processor may be replaced with packing of the circular images.

In one embodiment of the fisheye 360-degree video data processing process, the data processor of the 360-degree video reception apparatus may extract 360-degree video data corresponding to a circular image from a picture, project the extracted data onto a plane, and blend and stitch planes into one plane. In addition, the data processor may correct the distortion of the 360-degree video data based on the lens type and distortion-related information of the camera lens information and/or supplemental camera lens information.

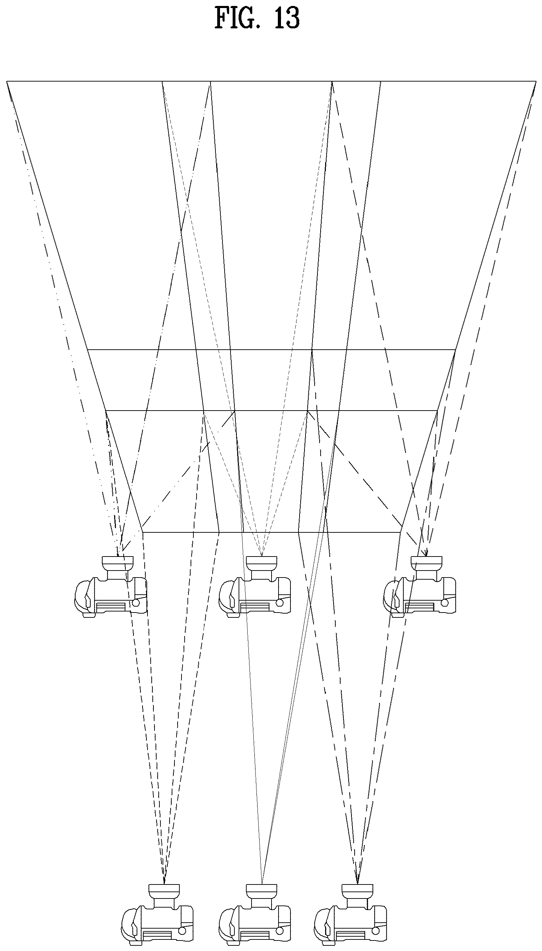

FIG. 13 exemplarily shows an example of stitching a 360-degree video to a panoramic image based on camera lens information and/or supplemental camera lens information according to the present disclosure.

Referring back to FIG. 12, the receiver of the 360-degree video receiving apparatus may acquire and process 360-degree video data and/or signaling information from the received broadcast signal. The data processor and the metadata parser of the 360-degree video reception appartus may acquire 360-degree video data and/or signaling information from a received bitstream.

The data processor of the 360-degree video reception apparatus may extract circular images from a picture haivng the 360-degree video data (Extraction). The data processor may extract images for a single (fisheye) lens.

According to an embodiment, the data processor may extract rectangular regions containing circular images, and then extract a region to which a circular image is mapped from the corresponding rectangular region. The area corresponding to the inner intersection of the rectangular region and the region to which the circular image is mapped may be actual 360-degree video data acquired through the lens. The remaining invalid areas may be marked in black or the like so as to be distinguished. According to an embodiment, the data processor may extract an area corresponding to the intersection of the rectangular regions and the area to which a circular image is mapped.

The data processor may specify a rectangular region using the camera lens information and/or supplemental camera lens information described above. In this operation, information about the top left point of the rectangular region, and width and/or height information, which are provided by the camera lens information and/or supplemental camera lens information, may be used. In addition, the data processor may specify a region to which the circular image is mapped, using the camera lens information and/or supplemental camera lens information described above. In this operation, information about the center point and/or radius information, wich are provided by the camera lens information and/or the supplemental camera lens information, may be used.

The data processor of the 360-degree video reception appartus may project the extracted circular images onto a plane (Projection). Here, the plane may be an equirectangular projection (ERP) plane. This projection process may be an intermediate step for re-projecting the circular images onto a 3D space such as a spherical coordinate system.

An effective area having the actual 360-degree video data described above may be defined as an intersection of a rectangular region and a region to which a circular image is mapped. Here, the data processor may perform the ERP onto the effective area based on a one-to-one relationship between the effective area and the region that the effective area has in the 3D space. As described above, the area that the effective region has in the 3D space may be defined based on the angle of view information and the center point information. The information about the center point may be expressed in the form of yaw, pitch, and roll or of azimuth, elevation, and tilt.

According to an embodiment, the data processor may project an image of the extracted effective area onto a plane based on standardized projection according to an angle of view. According to an embodiment, when the axis of the lens does not coincide between the circular images due to mechanical characteristics, or the lens correction is not properly performed by the ISP, the metadata processor of the transmitting side may generate fields therefor and include the same in the camera lens information and/or in the supplemental camera lens information. The fields may be used when the data processor performs projection on the receiving side. The fields may include lens type information, distortion correction related information, and/or lens shading correction related information.

The data processor of the 360-degree video reception appartus may blend at least one projected plane into one ERP plane (Blending). According to an embodiment, when an overlapping portion is formed between the circular images due to the angle of view of the fisheye lens and the center point coordinates. The data processor may appropriately combine pixel information about the overlapping portion.

The data processor of the 360-degree video reception apparatus may perform rendering based on the finally combined ERP plane (picture) to generate a corresponding viewport.

As shown in the figure, the process of rendering an image of the data processor may be replaced by the above-described operations such as extraction, projection, and blending.

The camera lens information and/or supplemental camera lens information described above may be delivered in the form of a box in an ISOBMFF file as described above. The 360 video data may be stored and transmitted based on the ISOBMFF file, and the camera lens information and/or the supplemental camera lens information may be delivered in the form of a box in the ISOBMFF file.

According to an embodiment, the box for the camera lens information and/or the supplemental camera lens information may be signaled for 360-degree video data stored/delivered through a corresponding video track (stream), sample, sample group, or the like. According to an embodiment, the box for the camera lens information and/or the supplemental camera lens information may be arranged under a visual sample entry of a track in which the corresponding 360-degree video data is stored/transmitted. According to an embodiment, the video information may be delivered through a format such as CFF.

As an example, the box for the camera lens information and/or the supplemental camera lens information may include an SEI NAL unit. In addition, as an example, the box for the camera lens information and/or the supplemental camera lens information may be included in VisualSampleEntry, AVCSampleEntry, MVCSampleEntry, SVCSampleEntry, HEVCSampleEntry, or the like associated with the corresponding 360-degree video information.

According to an embodiment, the box for the camera lens information and/or the supplemental camera lens information may be included in SEI or Video Usability Information (VUI) that provides related information according to a region. Accordingly, different signaling information may be provided for each region for a video frame included in the file format.

According to an embodiment, the box for the camera lens information and/or the supplemental camera lens information may be delivered in timed metadata.

When the content of the camera lens information and/or the supplemental camera lens information delivered in th timed metadata are identically applied to all video samples, the box for the camera lens information and/or the supplemental camera lens information may be included in the sample entry in the header (such as a moov or moof box) of the timed metadata track.

Alternatively, when the content of the camera lens information and/or the supplemental camera lens information delivered through timed metadata needs to be applied differently according to a video sample, the box for the camera lens information and/or the supplemental camera lens information may be included in the timed metadata sample. In this case, fields of the box for the camera lens information and/or the supplemental camera lens information may be applied to a corresponding video sample.

Alternatively, when the content of the camera lens information and/or the supplemental camera lens information delivered through the timed metadata should be applied to the entire video sequence, the box for the camera lens information and/or the supplemental camera lens information may be included in the sample entry of the timed metadata track as described above, but the information (fields) of the box may be applied to the entire video sequence.

The camera lens information and/or the supplemental camera lens information may be delivered according to DASH.

A DASH-based descriptor may include a @schemeIdUri field, a @value field, and/or a @id field. The @schemeIdUri field may provide a URI for identifying the scheme of the descriptor. The @value field may have values whose meaning is defined by the scheme indicated by the @schemeIdUri field. That is, the @value field may have values of descriptor elements, which may be called parameters, according to the scheme. These parameters may be separated from each other by ",". @id may indicate the identifier of the descriptor. When the same identifier is given, the same scheme ID, value, and parameter may be included.

When the camera lens information and/or the supplemental camera lens information are delivered according to DASH, the camera lens information and/or the supplemental camera lens information may be described in the form of a DASH descriptor, and be included in the MPD or the like and delivered to the receiving side. The descriptors for the camera lens information and/or the supplemental camera lens information may be delivered in the form of the above-described essential property descriptor and/or supplemental property descriptor. These descriptors may be delivered in the adaptation set, representation, sub-representation, and the like of the MPD.

The camera lens information and/or the supplemental camera lens information according to all the above-described embodiments may also be described in the form of a DASH-based descriptor. That is, for all the above-described embodiments of the camera lens information and/or the supplemental camera lens information, the information may be described by replacing each signaling field with a parameter of @value.

The above-described embodiments of the camera lens information and/or the supplemental camera lens information according to the present disclosure may be combined with each other. In embodiments of the 360-degree video transmission apparatus and/or the 360-degree video reception apparatus according to the present disclosure, camera lens information and/or supplemental camera lens information may be the camera lens information and/or the supplemental camera lens information according to the above-described embodiments.

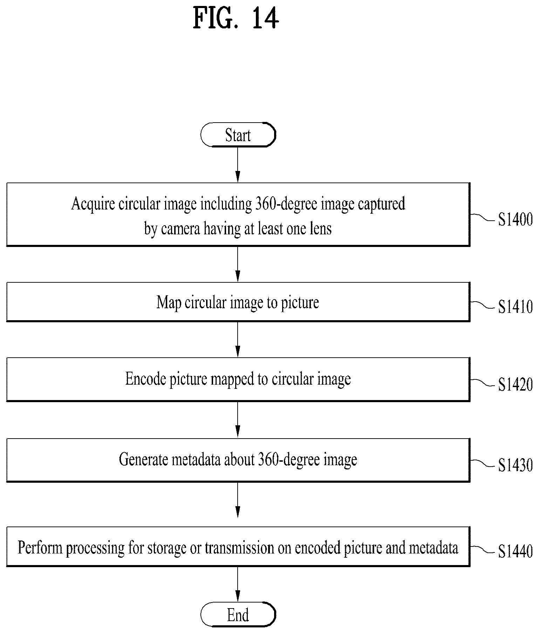

FIG. 14 schematically illustrates a method of processing 360-degree video data by a 360-degree video transmission apparatus according to the present disclosure. The method disclosed in FIG. 14 may be performed by the 360 degree video transmission apparatus disclosed in FIG. 5. Specifically, as an example, in FIG. 14, S1400 may be performed by the data input unit of the 360-degree video transmission apparatus, S1410 may be performed by the projection processor of the 360-degree video transmission apparatus, and S1420 may be performed by the data encoder of the360-degree video transmission apparatus. S1430 may be performed by the metadata processor of the 360-degree video transmission apparatus, and S 1440 may be performed by the transmission processor of the 360-degree video transmission apparatus. The transmission processor may be included in the transmitter.

The 360-degree video transmission apparatus acquires a circular image including a 360-degree image captured by a camera having at least one lens (S1400). The 360-degree video transmission apparatus may acquire a circular image including a 360-degree image captured by a camera having at least one lens. For example, the lens may be a fisheye lens.

The 360-degree video transmission apparatus maps the circular image to a picture (S1410). The 360-degree video transmission apparatus may map the circular image to a rectangular region of the picture. The 360-degree video transmission apparatus may acquire multiple circular images, and the picture may include at least one rectangular area. In this case, the 360-degree video transmission apparatus may map at least one of the multiple circular images to the rectangular region.

In addition, the 360-degree video transmission apparatus may perform processing such as rotating, rearranging, or changing the resolution of the rectangular region of the picture. The processing may be referred to as region-wise packing or frame packing.

In addition, the 360-degree video transmission apparatus may correct distortion of the circular image of the picture. Thereby, the 360-degree video transmission apparatus may derive a corrected picture.

The 360-degree video transmission apparatus encodes the picture to which the circular image is mapped (S1420). The 360-degree video transmission apparatus may encode the picture. In addition, the 360-degree video transmission apparatus may encode metadata for the picture.

The 360-degree video transmission apparatus generates metadata for the 360-degree image (S1430). The metadata may include camera lens information.

The camera lens information may include a camera_lens_info_id field, a camera_lens_info_cancel_flag field, a camera_lens_info_persistence_flag field, a supplemental_info_present_flag field, a view_dimension_idc_flag field, a view_dimension_idc field, a num_circular_images_minus1 field, a camera_lens_info_present_flag[i] field, a scene_radius_flag[i] field, a camera_center_offset_flag[i] field, a camera_rotation_flag[i] field, a lens_distortion_correction_flag[i] field, a circular_image_center_x[i] field, a circular_image_center_y[i] field, a rect_region_top[i] field, a rect_region_left[i] field, a rect_region_width[i] field, a rect_region_height[i] field, a full_radius[i] field, a scene_radius[i] field, a camera_center_azimuth[i] field, a camera_center_elevation[i] field, a camera_center_tilt[i] field, a camera_center_offset_x[i] field, a camera_center_offset_y[i] field, a camera_center_offset_z[i] field, a field_of_view[i] field, a lens_projection_type[i] field, a num_polynomial_coefs_distortion[i] field, a distortion_angle[i][j] field, a num_polynomial_coefs_distortion[i][j] field, a polynomial_coef_k_distortion[i][j][k] field, and/or a radial_distortion_type[i] field, as described above.

The fields have meanings as described above.

Specifically, as an example, the camera lens information may include information indicating a lens projection type of the circular image. The lens projection type may be one of rectilinear projection, stereographic projection, equidistance projection, equisolid projection, orthographic projection, and angular polynomial projection.

For example, when the value of the information indicating the lens projection type is 1, the lens projection type of the circular image may be derived as the rectilinear projection. When the value of the information indicating the lens projection type is 2, the lens projection type of the circular image may be derived as the stereographic projection. When the value of information indicating the lens projection type is 3, the lens projection type of the circular image may be derived as the equidistance projection. When the value of the information indicating the lens projection type is 4, the lens projection type of the circular image may be derived as the equisolid projection. When the value of the information indicating the lens projection type is 5, the lens projection type of the circular image may be derived as the orthographic projection. When the value of the information indicating the lens projection type is 255, the lens projection type of the circular image may be derived as the angular polynomial projection. When the value of the information indicating the lens projection type is 0, the lens projection type of the circular image may not be specified. The information indicating the lens projection type may represent the lens_projection_type[i] field.

As another example, the camera lens information may include a flag indicating whether polynomial function related information for correcting distortion of the circular image is present. For example, when the value of the flag is 1, the camera lens information may include the polynomial function related information. When the value of the flag is 0, the camera lens information may not include the polynomial function related information. The flag may represent the lens_distortion_correction_flag[i] field.

The polynomial function related information may include information indicating the number of polynomial functions for the circular image. The information indicating the number of polynomial functions may represent the num_polynomial_coefs_distortion[i][j] field.

The polynomial function related information may include information indicating an angle at which a polynomial function for the circular image is applied. The information indicating the angle at which the polynomial function is applied may represent the distortion_angle[i][j] field.

The polynomial function related information may include information indicating the number of coefficients of the polynomial function for the circular image. The information indicating the number of coefficients of the polynomial function may represent the num_polynomial_coefs_distortion[i][j] field.

The polynomial function related information may include information indicating the coefficients of the polynomial function for the circular image. The information indicating the coefficients of the polynomial function may represent the polynomial_coef_k_distortion[i][j][k] field.

A polynomial function for correcting distortion of the circular image may be derived based on the polynomial function related information, and distortion of the circular image may be corrected based on the polynomial function.

As another example, the camera lens information may include information indicating a radial distortion type of the circular image. The radial distortion type may be one of barrel distortion, pincushion distortion, and mustache distortion.

For example, when the value of the information indicating the radial distortion type is 1, the radial distortion type of the circular image may be derived as the barrel distortion. When the value of the information indicating the radial distortion type is 2, the radial distortion type of the circular image may be derived as the pincushion distortion. When the value of the information indicating the radial distortion type is 3, the radial distortion type of the circular image may be derived as the mustache distortion.

The radial distortion of the circular image may be corrected based on Equation 5 described above. In this case, the radial distortion coefficient and the tangential distortion coefficient of Equation 5 may be derived based on the radial distortion type of the circular image.

Further, the metadata may include supplemental camera lens information.

The supplemental camera lens information may include a num_circular_images field, an image_flip[i] field, a image_scale_axis_angle[i] field, an image_scale_x[i] field, an image_scale_y[i] field, a num_angle_for_displaying_fov[i] field, a displayed_fov[i][j] field, an overlapped_fov[i][j] field, a num_local_fov_region[i] field, a start_radius[i][j] field, a end_radius[i][j] field, a start_angle[i][j] field, an end_angle[i][j] field, a radius_delta[i][j] field, an angle_delta[i][j] field, a local_fov_weight[i][j][k][l] field, a num_polynomial_coefficients_lsc[i] field, a polynomial_coefficient_K_lsc_R[i][j] field, a polynomial_coefficient_K_lsc_G[i][j] field, a polynomial_coefficient_K_lsc_B[i][j] field, a num_deadzones field, a deadzone_left_horizontal_offset[i] field, a deadzone_top_vertical_offset[i] field, a deadzone_width[i] field, and/or a deadzone_height[i] field, as described above.

The fields have meanings as described above.

The metadata may be transmitted through an SEI message. In addition, the metadata may be included in AdaptationSet, Representation, or SubRepresentation of the media presentation description (MPD). For example, the fisheye video information may be transmitted in the form of the Dynamic Adaptive Streaming over HTTP (DASH) descriptor included in the MPD. Here, the SEI message may be used to assist in decoding a 2D image or displaying the 2D image in a 3D space.

The 360-degree video transmission apparatus performs processing on the encoded picture and the metadata so as to be stored or transmitted (S1440). The 360-degree video transmission apparatus may encapsulate the encoded 360-degree video data and/or the metadata in the form of a file or the like. The 360-degree video transmission apparatus may encapsulate the encoded 360-degree video data and/or the metadata in a file format such as ISOBMFF, CFF or other DASH segments. The 360-degree video transmission apparatus may include the metadata in the file format. For example, the metadata may be included in various levels of boxes in the ISOBMFF file format, or may be included as data in separate tracks in the file. The 360-degree video transmission apparatus may encapsulate the metadata as a file. The 360-degree video transmission apparatus may perform processing for transmission on the 360-degree video data encapsulated according to the file format. The 360-degree video transmission apparatus may process the 360-degree video data according to any transport protocol. The processing for transmission may include processing for delivery over a broadcasting network, or processing for transmission over a communication network such as broadband. In addition, the 360-degree video transmission apparatus may perform processing for transmission on the metadata. The 360-degree video transmission apparatus may transmit the processed 360-degree video data and metadata over a broadcasting network and/or broadband.

According to the present disclosure, a polynomial function for distortion may be derived based on the polynomial function related information about a 360-degree image, and the distortion may be corrected based on the characteristics of a lens for the 360-degree image as the polynomial function. Thus, 360-degree image data may be more accurately mapped to a 3D space in consideration of the characteristics of the lens.

In addition, according to the present disclosure, a model for a radial distortion type may be derived based on the radial distortion type information about the 360-degree image, and the radial distortion may be corrected based on the characteristics of the lens for the 360-degree image. Thus, 360-degree image data may be more accurately mapped to a 3D space in consideration of the characteristics of the lens.

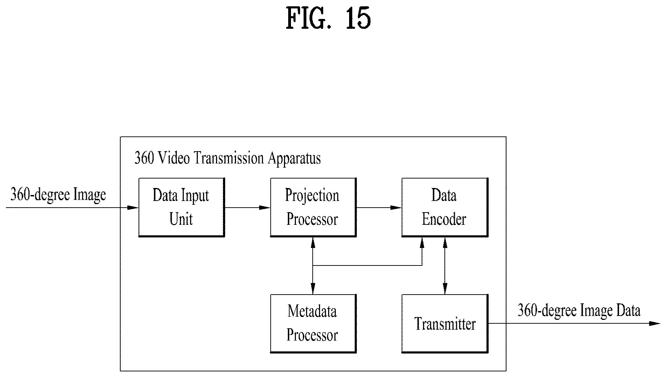

FIG. 15 schematically illustrates a 360-degree video transmission apparatus configured to carry out the 360-degree image data processing method according to the present disclosure. The method disclosed in FIG. 14 may be performed by the 360 degree video transmission apparatus disclosed in FIG. 15. Specifically, for example, the data input unit of the 360-degree video transmission apparatus of FIG. 15 may perform S1400 of FIG. 14, and the projection processor of the 360-degree video transmission apparatus of FIG. 15 may perform S1410 of FIG. 14. The data encoder of the 360-degree video transmission apparatus of FIG. 15 may perform S1420 of FIG. 14, and the metadata processor of the 360-degree video transmission apparatus of FIG. 15 may perform S1430 of FIG. 14. The transmission processor of the 360-degree video transmission apparatus of FIG. 15 may perform S1440 of FIG. 14. The transmission processor may be included in the transmitter.

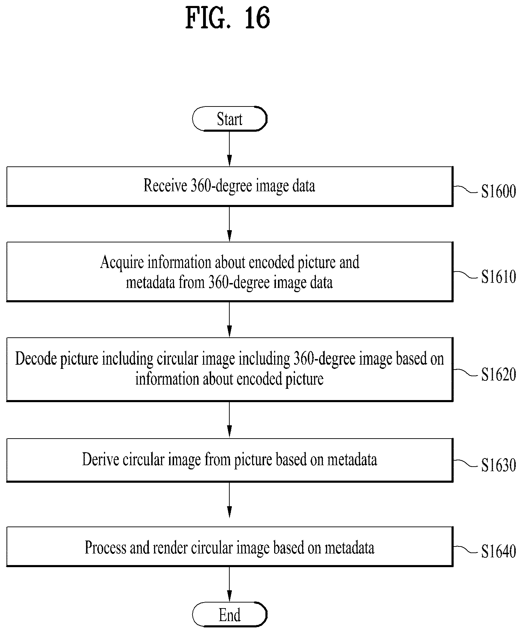

FIG. 16 schematically illustrates a method of processing 360-degree video data by a 360-degree video reception apparatus according to the present disclosure. The method disclosed in FIG. 16 may be performed by the 360-degree video reception apparatus disclosed in FIG. 6. Specifically, for example, S1600 of FIG. 16 may be performed by the receiver of the 360-degree video reception apparatus, and S1610 may be performed by the reception processor of the 360-degree video reception apparatus. S1620 of the 360-degree video may be performed by the data decoder of the reception apparatus, and S1630 and S1640 may be performed by the renderer of the 360-degree video reception apparatus.

The 360-degree video reception apparatus receives 360-degree image data (S 1600). The 360-degree video reception apparatus may receive the 360-degree video data signaled from the 360-degree video transmission apparatus over a broadcasting network. In addition, the 360-degree video reception apparatus may receive the 360-degree video data through a communication network, such as broadband, or a storage medium.

The 360-degree video reception apparatus acquires information and metadata about an encoded picture from the 360-degree video data (S1610). The 360-degree video reception apparatus may process the received 360-degree video data according to the transport protocol, and acquire information about the encoded picture and the metadata from the 360-degree video data. In addition, the 360-degree video reception apparatus may perform a reverse of the process of the processing of the 360-degree video transmission apparatus for transmission.

The metadata may include camera lens information.

The camera lens information may include a camera_lens_info_id field, a camera_lens_info_cancel_flag field, a camera_lens_info_persistence_flag field, a supplemental_info_present_flag field, a view_dimension_idc_flag field, a view_dimension_idc field, a num_circular_images_minus1 field, a camera_lens_info_present_flag[i] field, a scene_radius_flag[i] field, a camera_center_offset_flag[i] field, a camera_rotation_flag[i] field, a lens_distortion_correction_flag[i] field, a circular_image_center_x[i] field, a circular_image_center_y[i] field, a rect_region_top[i] field, a rect_region_left[i] field, a rect_region_width[i] field, a rect_region_height[i] field, a full_radius[i] field, a scene_radius[i] field, a camera_center_azimuth[i] field, a camera_center_elevation[i] field, a camera_center_tilt[i] field, a camera_center_offset_x[i] field, a camera_center_offset_y[i] field, a camera_center_offset_z[i] field, a field_of_view[i] field, a lens_projection_type[i] field, a num_polynomial_coefs_distortion[i] field, a distortion_angle[i][j] field, a num_polynomial_coefs_distortion[i][j] field, a polynomial_coef_k_distortion[i][j][k] field, and/or a radial_distortion_type[i] field, as described above.

The fields have meanings as described above.

Specifically, as an example, the camera lens information may include information indicating a lens projection type of the circular image. The lens projection type may be one of rectilinear projection, stereographic projection, equidistance projection, equisolid projection, orthographic projection, and angular polynomial projection.

For example, when the value of the information indicating the lens projection type is 1, the lens projection type of the circular image may be derived as the rectilinear projection. When the value of the information indicating the lens projection type is 2, the lens projection type of the circular image may be derived as the stereographic projection. When the value of information indicating the lens projection type is 3, the lens projection type of the circular image may be derived as the equidistance projection. When the value of the information indicating the lens projection type is 4, the lens projection type of the circular image may be derived as the equisolid projection. When the value of the information indicating the lens projection type is 5, the lens projection type of the circular image may be derived as the orthographic projection. When the value of the information indicating the lens projection type is 255, the lens projection type of the circular image may be derived as the angular polynomial projection. When the value of the information indicating the lens projection type is 0, the lens projection type of the circular image may not be specified. The information indicating the lens projection type may represent the lens_projection_type[i] field.

As another example, the camera lens information may include a flag indicating whether polynomial function related information for correcting distortion of the circular image is present. For example, when the value of the flag is 1, The camera lens information may include the polynomial function related information. When the value of the flag is 0, the camera lens information may not include the polynomial function related information. The flag may represent the lens_distortion_correction_flag[i] field.

The polynomial function related information may include information indicating the number of polynomial functions for the circular image. The information indicating the number of polynomial functions may represent the num_polynomial_coefs_distortion[i][j] field.

The polynomial function related information may include information indicating an angle at which a polynomial function for the circular image is applied. The information indicating the angle at which the polynomial function is applied may represent the distortion_angle[i][j] field.

The polynomial function related information may include information indicating the number of coefficients of the polynomial function for the circular image. The information indicating the number of coefficients of the polynomial function may represent the num_polynomial_coefs_distortion[i][j] field.

The polynomial function related information may include information indicating the coefficients of the polynomial function for the circular image. The information indicating the coefficients of the polynomial function may represent the polynomial_coef_k_distortion[i][j][k] field.

The 360-degree video reception apparatus may derive a polynomial function for correcting distortion of the circular image based on the polynomial function related information, and may correct distortion of the circular image based on the polynomial function.

As another example, the camera lens information may include information indicating a radial distortion type of the circular image. The radial distortion type may be one of barrel distortion, pincushion distortion, and mustache distortion.

For example, when the value of the information indicating the radial distortion type is 1, the radial distortion type of the circular image may be derived as the barrel distortion. When the value of the information indicating the radial distortion type is 2, the radial distortion type of the circular image may be derived as the pincushion distortion. When the value of the information indicating the radial distortion type is 3, the radial distortion type of the circular image may be derived as the mustache distortion.

The 360-degree video reception apparatus may correct the radial distortion of the circular image based on Equation 5 described above. In this case, the radial distortion coefficient and the tangential distortion coefficient of Equation 5 may be derived based on the radial distortion type of the circular image.

Further, the metadata may include supplemental camera lens information.

The supplemental camera lens information may include a num_circular_images field, an image_flip[i] field, a image_scale_axis_angle[i] field, an image_scale_x[i] field, an image_scale_y[i] field, a num_angle_for_displaying_fov[i] field, a displayed_fov[i][j] field, an overlapped_fov[i][j] field, a num_local_fov_region[i] field, a start_radius[i][j] field, a end_radius[i][j] field, a start_angle[i][j] field, an end_angle[i][j] field, a radius_delta[i][j] field, an angle_delta[i][j] field, a local_fov_weight[i][j][k][l] field, a num_polynomial_coefficients_lsc[i] field, a polynomial_coefficient_K_lsc_R[i][j] field, a polynomial_coefficient_K_lsc_G[i][j] field, a polynomial_coefficient_K_lsc_B[i][j] field, a num_deadzones field, a deadzone_left_horizontal_offset[i] field, a deadzone_top_vertical_offset[i] field, a deadzone_width[i] field, and/or a deadzone_height[i] field, as described above.

The fields have meanings as described above.

The metadata may be received through an SEI message. In addition, the metadata may be included in AdaptationSet, Representation, or SubRepresentation of the media presentation description (MPD). For example, the fisheye video information may be received in the form of the Dynamic Adaptive Streaming over HTTP (DASH) descriptor included in the MPD. Here, the SEI message may be used to assist in decoding a 2D image or displaying the 2D image in a 3D space.

The 360-degree video reception apparatus decodes a picture including a circular image including a 360-degree image based on the information about the encoded picture (S1620). The 360-degree video reception apparatus may decode the picture including the circular image based on the information about the encoded picture. The circular image may be a region including the 360-degree image.

The 360-degree video reception apparatus derives the circular image from the picture based on the metadata (S1630). As an example, the camera lens information of the metadata may include information describing the circular image and information describing a rectangular region to which the circular image is mapped. The 360-degree video reception apparatus may derive the rectangular region based on the information describing the rectangular region, and derive the circular image mapped to the rectangular region based on the information describing the circular image. In this case, an area corresponding to the inner intersection of the rectangular region and the area to which the circular image is mapped may be actual 360-degree image data. The remaining invalid areas may be marked in black so as to be distinguished. According to an embodiment, the 360-degree video reception apparatus may derive the area corresponding to the intersection of the rectangular region and the area to which the circular images are mapped. Here, the area to which the circular image is mapped may be referred to as a circular region.

The camera lens information may include information about a dead zone to which the 360 degree image data is not mapped. The 360-degree video reception apparatus may derive a dead zone to which the 360-degree image data is not mapped based on the information about the dead zone to which the 360-degree image data is not mapped.

The 360-degree video reception apparatus processes and renders the circular image based on the metadata (S1640). The camera lens information may include information indicating the lens projection type, and the 360 video reception apparatus may map the circular image to a 3D space based on a spherical coordinate mapping equation derived based on the lens projection type. Specifically, for example, the 360 video reception apparatus may project the circular image onto a plane based on the spherical coordinate mapping equation derived based on the lens projection type (Projection). Here, the plane may be an equirectangular projection (ERP) plane. This projection process may be an intermediate step for re-projecting the circular image onto a 3D space such as a spherical coordinate system.

The camera lens information may include the polynomial function related information. The polynomial function related information may include information indicating an angle at which a polynomial function for the circular image is applied, information indicating the number of coefficients of the polynomial function, and information indicating the coefficients of the polynomial function. The 360-degree video reception apparatus may derive a polynomial function for correcting distortion of the circular image based on the polynomial function related information, and may correct distortion of the circular image based on the polynomial function.

The camera lens information may include information indicating a radial distortion type of the circular image. The 360-degree video reception apparatus may correct the radial distortion of the circular image based on Equation 5 described above.

The 360-degree video reception apparatus may perform rendering based on the finally combined ERP plane (picture) to generate a corresponding viewport.

According to the present disclosure, a polynomial function for distortion may be derived based on the polynomial function related information about a 360-degree image, and the distortion may be corrected based on the characteristics of a lens for the 360-degree image as the polynomial function. Thus, 360-degree image data may be more accurately mapped to a 3D space in consideration of the characteristics of the lens.

In addition, according to the present disclosure, a model for a radial distortion type may be derived based on the radial distortion type information about the 360-degree image, and the radial distortion may be corrected based on the characteristics of the lens for the 360-degree image. Thus, 360-degree image data may be more accurately mapped to a 3D space in consideration of the characteristics of the lens.

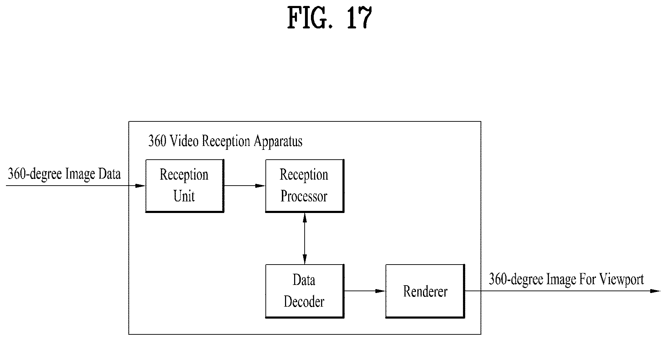

FIG. 17 schematically illustrates a 360-degree video reception apparatus configured to carry out the 360-degree image data processing method according to the present disclosure. The method disclosed in FIG. 16 may be performed by the 360-degree video reception apparatus disclosed in FIG. 17. Specifically, for example, the receiver of the 360-degree video reception apparatus of FIG. 17 may perform S1600 of FIG. 16, and the reception processor of the 360-degree video reception apparatus of FIG. 17 may perform S1610 of FIG. 16. The data decoder of the 360-degree video reception apparatus of FIG. 17 may perform S1620 of FIG. 16, and the renderer of the 360-degree video reception apparatus of FIG. 17 may perform S1630 and S1640 of FIG. 16.

The above-described steps may be skipped or replaced by other steps of performing similar/same operations according to an embodiment.

According to an embodiment of the present disclosure, the 360-degree video transmission apparatus may include a data input unit, a stitcher, a signaling processor, a projection processor, a data encoder, a transmission processor, and/or a transmitter, as described above. The internal components are configured as described above. According to an embodiment of the present disclosure, the 360-degree video transmission apparatus and the internal components thereof may perform the above-described embodiments of the method of transmitting a 360-degree video according to the present disclosure.

According to an embodiment of the present disclosure, the 360-degree video reception apparatus may include a receiver, a reception processor, a data decoder, a signaling parser, a re-projection processor, and/or a renderer, as described above. The internal components are configured as described above. According to an embodiment of the present disclosure, the 360-degree video reception apparatus and the internal components thereof may perform the above-described embodiments of the method of receiving a 360-degree video according to the present disclosure.

The internal components of the above-described device may be processors configured to execute successive processes stored in the memory, or may be other hardware components. These components may be positioned inside/outside the device.

According to embodiments, the above-described modules may be omitted or replaced by other modules configured to perform similar/same operations.

Each part, module, or unit described above may be a processor or hardware part that executes successive procedures stored in a memory (or storage unit). Each of the steps described in the above-described embodiment may be performed by processors or hardware parts. Each module/block/unit described in the above-described embodiment may operate as a hardware element/processor. In addition, the methods described in the present disclosure may be executed as code. The code may be written in a recoding medium readable by a processor, and thus may be read by the processor provided by the apparatus.

When embodiments of the present disclosure are implemented in software, the above-described method may be implemented as a module (process, function, etc.) configured to perform the above-described functions. The module may be stored in a memory and may be executed by a processor. The memory may be inside or outside the processor, and may be connected to the processor by various well-known means. The processor may include application-specific integrated circuits (ASICs), other chipsets, logic circuits, and/or data processing devices. The memory may include a read-only memory (ROM), a random access memory (RAM), a flash memory, a memory card, a storage medium, and/or other storage devices.

**Claims**

1. A method of processing 360-degree image data by a 360-degree video reception apparatus, the method comprising:

   receiving 360-degree image data;
   acquiring information about an encoded picture and metadata from the 360-degree image data;
   decoding a picture including a circular image including a 360-degree image based on the information about the encoded picture;
   deriving the circular image from the picture based on the metadata; and
   processing and rendering the circular image based on the metadata,
   wherein the metadata contains circular image information including:

      information for representing a number of circular images,
      camera lens information including information representing a lens projection type for each circular image, characterised
      wherein the lens projection type includes at least one of a stereographic projection, an equidistance projection, an equisolid projection, an orthographic projection, or an angular polynomial projection,
      a number of coefficient information for each circular image, and
      polynomial coefficient distortion information for representing a polynomial coefficient value of an angular curve function transformation of a radial distance between a sample and a center point in each circular image, and
      wherein the camera lens information includes at least one of a first value representing a stereographic type, or a second value representing an equidistance type for each circular image,
      wherein a type for the distortion is one of barrel distortion, pincushion distortion, and mustache distortion.

2. The method of claim 1, wherein the camera lens information comprises a flag indicating whether polynomial function related information for correcting distortion of the circular image is present.

3. The method of claim 2, wherein, when a value of the flag is 1, the camera lens information comprises the polynomial function related information,
   wherein the polynomial function related information comprises:

      information indicating an angle of application of a polynomial function for the circular image;
      information indicating the number of coefficients of the polynomial function; and
      information indicating the coefficients of the polynomial function.

4. The method of claim 3, the method further comprising:

      deriving a polynomial function for correcting distortion of the circular image based on the polynomial function related information; and
      correcting the distortion of the circular image based on the polynomial function.

5. The method of claim 1, the method further comprising: correcting the distortion of the circular image based on the following equation:

$$x_{\mathrm{u}} = x_{\mathrm{d}} + (x_{\mathrm{d}} - x_{\mathrm{c}})(K_1 r^2 + K_2 r^4 + \cdots) + (P_1(r^2 + 2(x_{\mathrm{d}} - x_{\mathrm{c}})^2) + 2P_2(x_{\mathrm{d}} - x_{\mathrm{c}})(y_{\mathrm{d}} - y_{\mathrm{c}}))(1 + P_3 r^2 + P_4 r^4 \cdots)$$

$$y_{\mathrm{u}} = y_{\mathrm{d}} + (y_{\mathrm{d}} - y_{\mathrm{c}})(K_1 r^2 + K_2 r^4 + \cdots) + (2P_1(x_{\mathrm{d}} - x_{\mathrm{c}})(y_{\mathrm{d}} - y_{\mathrm{c}}) + P_2(r^2 + 2(y_{\mathrm{d}} - y_{\mathrm{c}})^2))(1 + P_3 r^2 + P_4 r^4 \cdots),$$

where xd and yd are an x component and a y component of a sample of the circular image, xu and yu are a corrected x component and a corrected y component of the sample, xc and yc are an x component and a y component of a distortion center, Kn is an n-th radial distortion coefficient, and Pn is an n-th tangential distortion coefficient.

6. The method of claim 1, wherein the circular image information is received through an SEI message.

7. The method of claim 1, wherein the circular image information is received in a form of a Dynamic Adaptive Streaming over HTTP, DASH, descriptor included in Media Presentation Description, MPD.

8. A method of processing 360-degree image data by a 360-degree video transmission apparatus, the method comprising:

    acquiring a circular image including a 360-degree image captured by a camera having at least one lens;
    mapping the circular image to a picture;
    encoding the picture mapped to the circular image;
    generating metadata for the 360-degree image; and
    processing the encoded picture and the metadata so as to be stored or transmitted
    wherein the metadata contains circular image information including:

        information for representing a number of circular images,
        camera lens information including information representing a lens projection type for each circular image, characterised
        wherein the lens projection type includes at least one of a stereographic projection, an equidistance projection, an equisolid projection, an orthographic projection, or an angular polynomial projection,
        a number of coefficient information for each circular image, and
        polynomial coefficient distortion information for representing a polynomial coefficient value of an angular curve function transformation of a radial distance between a sample and a center point in each circular image, and
        wherein the camera lens information includes at least one of a first value representing a stereographic type, or a second value representing an equidistance type for each circular image.

9. The method of claim 8,
    wherein the camera lens information further comprises a flag indicating whether polynomial function related information for correcting distortion of the circular image is present.

**Patentansprüche**

1. Verfahren zur Verarbeitung von 360-Grad-Bilddaten durch eine 360-Grad-Videoempfangsvorrichtung, wobei das Verfahren Folgendes umfasst:

    Empfangen von 360-Grad-Bilddaten;
    Erfassen von Informationen über eine codierte Abbildung und Metadaten aus den 360-Grad-Bilddaten;
    Decodieren einer Abbildung, die ein kreisförmiges Bild einschließlich eines 360-Grad-Bildes auf der Grundlage der Informationen über die codierte Abbildung enthält;
    Ableiten des kreisförmigen Bildes aus der Abbildung auf der Grundlage der Metadaten; und
    Verarbeiten und Rendern des kreisförmigen Bildes auf der Grundlage der Metadaten, wobei die Metadaten Informationen des kreisförmigen Bildes enthalten, einschließlich:

        Informationen zur Darstellung einer Reihe von kreisförmigen Bildern, Kameralinseninformationen, einschließlich Informationen, die einen Linsenprojektionstyp für jedes kreisförmige Bild darstellen, **dadurch gekennzeichnet, dass** der Linsenprojektionstyp mindestens eine stereographische Projektion, eine äquidistante Projektion, eine äquisolide Projektion, eine orthografische Projektion oder eine Winkelpolynomprojektion enthält,
        einer Anzahl von Koeffizienteninformationen für jedes kreisförmige Bild, und
        Polynomkoeffizienten-Verzerrungsinformationen zur Darstellung eines Polynomkoeffizientenwerts einer Winkelkurvenfunktionstransformation eines radialen Abstands zwischen einer Stichprobe und einem Mittelpunkt in jedem kreisförmigen Bild, und

wobei die Kameralinseninformationen mindestens einen von einem ersten Wert, der einen stereographischen Typ darstellt, oder einen zweiten Wert, der einen äquidistanten Typ darstellt, für jedes kreisförmige Bild enthalten,

wobei ein Typ der Verzerrung eine Tonnenverzerrung, eine Kissenverzerrung und eine Schnurrbartverzerrung ist.

2. Verfahren nach Anspruch 1, wobei die Kameralinseninformationen ein Flag umfassen, das angibt, ob polynomfunktionsbezogene Informationen zur Korrektur der Verzerrung des kreisförmigen Bildes vorhanden sind.

3. Verfahren nach Anspruch 2, wobei, wenn ein Wert des Flags 1 ist, die Kameralinseninformationen die polynomfunktionsbezogenen Informationen umfassen,
wobei die polynomfunktionsbezogenen Informationen Folgendes umfassen:

Informationen, die den Anwendungswinkel einer Polynomfunktion für das kreisförmige Bild angeben;
Informationen, die die Anzahl der Koeffizienten der Polynomfunktion angeben; und
Informationen, die die Koeffizienten der Polynomfunktion angeben.

4. Verfahren nach Anspruch 3, wobei das Verfahren ferner Folgendes umfasst:

Ableiten einer Polynomfunktion zur Korrektur der Verzerrung des kreisförmigen Bildes auf der Grundlage der polynomfunktionsbezogenen Informationen; und
Korrigieren der Verzerrung des kreisförmigen Bildes auf der Grundlage der Polynomfunktion.

5. Verfahren nach Anspruch 1, wobei das Verfahren ferner Folgendes umfasst:

Korrigieren der Verzerrung des kreisförmigen Bildes auf der Grundlage der folgenden Gleichung:

$$x_\mathrm{u} = x_\mathrm{d} + (x_\mathrm{d} - x_\mathrm{c})(K_1 r^2 + K_2 r^4 + \cdots) + (P_1(r^2 + 2(x_\mathrm{d} - x_\mathrm{c})^2) + 2P_2(x_\mathrm{d} - x_\mathrm{c})(y_\mathrm{d} - y_\mathrm{c}))(1 + P_3 r^2 + P_4 r^4 \cdots)$$

$$y_\mathrm{u} = y_\mathrm{d} + (y_\mathrm{d} - y_\mathrm{c})(K_1 r^2 + K_2 r^4 + \cdots) + (2P_1(x_\mathrm{d} - x_\mathrm{c})(y_\mathrm{d} - y_\mathrm{c}) + P_2(r^2 + 2(y_\mathrm{d} - y_\mathrm{c})^2))(1 + P_3 r^2 + P_4 r^4 \cdots),$$

wobei xd und yd eine x-Komponente und eine y-Komponente einer Stichprobe des kreisförmigen Bildes sind, xu und yu eine korrigierte x-Komponente und eine korrigierte y-Komponente der Stichprobe sind, xc und yc eine x-Komponente und eine y-Komponente eines Verzerrungszentrums sind, Kn ein n-ter radialer Verzerrungskoeffizient ist und Pn ein n-ter tangentialer Verzerrungskoeffizient ist.

6. Verfahren nach Anspruch 1, wobei die Informationen des kreisförmigen Bildes durch eine SEI-Nachricht empfangen werden.

7. Verfahren nach Anspruch 1, wobei die Informationen des kreisförmigen Bildes in Form eines Dynamic Adaptive Streaming over HTTP-Deskriptors, DASH-Deskriptors, empfangen werden, der in einer Medienpräsentationsbeschreibung, MPD, enthalten ist.

8. Verfahren zur Verarbeitung von 360-Grad-Bilddaten durch eine 360-Grad-Videoübertragungsvorrichtung, wobei das Verfahren Folgendes umfasst:

Erfassen eines kreisförmigen Bildes einschließlich eines 360-Grad-Bildes, das von einer Kamera aufgenommen wird, die mindestens eine Linse aufweist;
Zuordnen des kreisförmigen Bildes zu einer Abbildung;
Codieren der dem kreisförmigen Bild zugeordneten Abbildung;
Erzeugen von Metadaten für das 360-Grad-Bild; und
Verarbeiten der codierten Abbildung und der Metadaten zur Speicherung oder Übertragung, wobei die Metadaten Informationen des kreisförmigen Bildes enthalten, einschließlich:

Informationen zur Darstellung einer Reihe von kreisförmigen Bildern, Kameralinseninformationen, einschließlich Informationen, die einen Linsenprojektionstyp für jedes kreisförmige Bild darstellen, **dadurch gekennzeichnet, dass** der Linsenprojektionstyp mindestens eine stereographische Projektion, eine äquidistante Projektion, eine äquisolide Projektion, eine orthografische Projektion oder eine Winkelpolynomprojektion enthält,
einer Anzahl von Koeffizienteninformationen für jedes kreisförmige Bild, und
Polynomkoeffizienten-Verzerrungsinformationen zur Darstellung eines Polynomkoeffizientenwerts einer Winkelkurvenfunktionstransformation eines radialen Abstands zwischen einer Stichprobe und einem Mittelpunkt in jedem kreisförmigen Bild, und
wobei die Kameralinseninformationen mindestens einen von einem ersten Wert, der einen stereographischen Typ darstellt, oder einen zweiten Wert, der einen äquidistanten Typ darstellt, für jedes kreisförmige Bild enthalten.

**9.** Verfahren nach Anspruch 8,
wobei die Kameralinseninformationen ferner ein Flag umfassen, das angibt, ob polynomfunktionsbezogene Informationen zur Korrektur der Verzerrung des kreisförmigen Bildes vorhanden sind.

**Revendications**

**1.** Procédé de traitement de données d'image à 360 degrés par un appareil de réception vidéo à 360 degrés, le procédé comprenant :

la réception de données d'image à 360 degrés ;
l'acquisition d'informations concernant un cliché encodé et de métadonnées à partir des données d'image à 360 degrés ;
le décodage d'un cliché incluant une image circulaire incluant une image à 360 degrés sur la base des informations concernant le cliché encodé ;
la dérivation de l'image circulaire à partir du cliché sur la base des métadonnées ; et
le traitement et le rendu de l'image circulaire sur la base des métadonnées,
dans lequel les métadonnées contiennent des informations d'image circulaire incluant :

des informations pour représenter un nombre d'images circulaires,
des informations d'objectif de caméra incluant des informations représentant un type de projection d'objectif pour chaque image circulaire, **caractérisé en ce que** le type de projection d'objectif inclut au moins une parmi une projection stéréographique, une projection à équidistance, une projection équisolide, une projection orthographique ou une projection polynomiale angulaire,
un nombre d'informations de coefficient pour chaque image circulaire, et
des informations de distorsion de coefficient polynomial pour représenter une valeur de coefficient polynomial d'une transformation de fonction de courbe angulaire d'une distance radiale entre un échantillon et un point central dans chaque image circulaire, et
dans lequel les informations d'objectif de caméra incluent au moins une parmi une première valeur représentant un type stéréographique, ou une deuxième valeur représentant un type d'équidistance pour chaque image circulaire,
dans lequel un type pour la distorsion est une parmi une distorsion en barillet, une distorsion en coussinet et une distorsion en moustache.

**2.** Procédé selon la revendication 1, dans lequel les informations d'objectif de caméra comprennent un drapeau indiquant si des informations relatives à la fonction polynomiale pour corriger une distorsion de l'image circulaire sont présentes.

**3.** Procédé selon la revendication 2, dans lequel, lorsqu'une valeur du drapeau est 1, les informations d'objectif de caméra comprennent les informations relatives à la fonction polynomiale,
dans lequel les informations relatives à la fonction polynomiale comprennent :

des informations indiquant un angle d'application d'une fonction polynomiale pour l'image circulaire ;
des informations indiquant le nombre de coefficients de la fonction polynomiale ; et
des informations indiquant les coefficients de la fonction polynomiale.

**4.** Procédé selon la revendication 3, le procédé comprenant en outre :

la dérivation d'une fonction polynomiale pour corriger une distorsion de l'image circulaire sur la base des informations relatives à la fonction polynomiale ; et

la correction de la distorsion de l'image circulaire sur la base de la fonction polynomiale.

5. Procédé selon la revendication 1, le procédé comprenant en outre : la correction de la distorsion de l'image circulaire sur la base de l'équation suivante :

$$x_u = x_d + (x_d - x_c)(K_1 r^2 + K_2 r^4 + \cdots) + (P_1(r^2 + 2(x_d - x_c)^2) + 2P_2(x_d - x_c)(y_d - y_c))(1 + P_3 r^2 + P_4 r^4 \cdots)$$

$$y_u = y_d + (y_d - y_c)(K_1 r^2 + K_2 r^4 + \cdots) + (2P_1(x_d - x_c)(y_d - y_c) + P_2(r^2 + 2(y_d - y_c)^2))(1 + P_3 r^2 + P_4 r^4 \cdots),$$

où xd et yd sont une composante x et une composante y d'un échantillon de l'image circulaire, xu et yu sont une composante x corrigée et une composante y corrigée de l'échantillon, xc et yc sont une composante x et une composante y d'un centre de distorsion, Kn est un nième coefficient de distorsion radiale, et Pn est un nième coefficient de distorsion tangentielle.

6. Procédé selon la revendication 1, dans lequel les informations d'image circulaire sont reçues par le biais d'un message SEI.

7. Procédé selon la revendication 1, dans lequel les informations d'image circulaire sont reçues sous forme d'un descripteur de diffusion en flux adaptatif dynamique sur HTTP, DASH (pour Dynamic Adaptive Streaming over HTTP), inclus dans la description de la présentation aux médias, MPD (pour Media Presentation Description).

8. Procédé de traitement de données d'image à 360 degrés par un appareil de transmission vidéo à 360 degrés, le procédé comprenant :

l'acquisition d'une image circulaire incluant une image à 360 degrés capturée par une caméra ayant au moins un objectif ;
le mappage de l'image circulaire sur un cliché ;
l'encodage du cliché mappé sur l'image circulaire ;
la génération de métadonnées pour l'image à 360 degrés ; et
le traitement du cliché encodé et des métadonnées de façon à ce qu'ils soient stockés ou transmis, dans lequel les métadonnées contiennent des informations d'image circulaire incluant :

des informations pour représenter un nombre d'images circulaires,
des informations d'objectif de caméra incluant des informations représentant un type de projection d' objectif pour chaque image circulaire, **caractérisé en ce que** le type de projection d'objectif inclut au moins une parmi une projection stéréographique, une projection à équidistance, une projection équisolide, une projection orthographique ou
une projection polynomiale angulaire,
un nombre d'informations de coefficient pour chaque image circulaire, et
des informations de distorsion de coefficient polynomial pour représenter une valeur de coefficient polynomial d'une transformation de fonction de courbe angulaire d'une distance radiale entre un échantillon et un point central dans chaque image circulaire, et
dans lequel les informations d'objectif de caméra incluent au moins une parmi une première valeur représentant un type stéréographique, ou une deuxième valeur représentant un type d'équidistance pour chaque image circulaire.

9. Procédé selon la revendication 8,
dans lequel les informations d'objectif de caméra comprennent en outre un drapeau indiquant si des informations relatives à la fonction polynomiale pour corriger une distorsion de l'image circulaire sont présentes.

FIG. 1

# FIG. 2

```
250

aligned(8) class Box(unsigned int(32) boxtype, optional
unsigned int(8)[16] extended_type)
{
    unsigned int(32) size;
    unsigned int(32) type = boxtype;
    if (size==1) {
        unsigned int(64) largesize;
    } else if (size==0) {
    //      box extends to end of file
    }
    if (boxtype=='uuid') {
        unsigned int(8)[16] usertype = extended_type;)
    }
}

aligned(8) class FullBox(unsigned int(32) boxtype, unsigned int(8)
v, bit(24) f) extends Box(boxtype) {
    unsigned int(8)        version = v;
    bit(24)                    flags = f;
}
```

EP 3 745 719 B1

# FIG. 3

| ftyp |
|------|

| moov |
|------|
| mvhd |
| trak#1 |
| trak#N |
| mvex |
| udta |

| track |
|-------|
| tkhd |
| tref |
| edts |
| mdia |
| udta |

| mdia |
|------|
| mdhd |
| hdlr |
| elng |
| minf |

| minf |
|------|
| vmhd.. |
| dinf |
| stbl |

| stbl |
|------|
| stsd |
| stts |
| ctts |
| cslg |
| stsc |
| stsz |
| stco |
| stss |
| subs |
| sgpd |

| mvex |
|------|
| mehd |
| trex |
| leva |
| trep |

| moof |
|------|
| mfhd |
| traf#1 |
| traf#N |

| traf |
|------|
| tfhd |
| trun#1 |
| trun#N |
| tfdt |

# FIG. 4

HTTP Server

Media Presentation
Description (MPD)

2200

Segment

⋮

Segment

2210

DASH Client

DASH Client Conteroller

MPD
Parser

Media
Engine

Segment
Parser

HTTP Clinet

HTTP

400

Media Presentation

Period, start = 0s

Period, start = 100s

Period, start = 195s

⋮

Period
Start = 100s
baseURL=http;//dash.com/

Adaptation Set 1
Audio

Adaptation Set 2
Video

Adaptation Set 3
Captions

⋮

410

Representation 1
bnadwidth = 850kbps
width = 1280, height = 720, ...

Segment Information
Duration = 10s
Template:/video-1-$Number$

Representation 2
bnadwidth = 1250kbps
baseURL=http;//dash.com/

...

Representation M

Segment Information

Initialization Segment

http;//dash.com/video-1

Media Segment 1
start = 100s
http;//dash.com/video-1-1

Media Segment 2
start = 110s
http;//dash.com/video-1-2

...

Media Segment 10
start = 190s
http;//dash.com/video-10

EP 3 745 719 B1

# FIG. 5

360 Video Transmission Apparatus

Data Input Unit → Metadata Processor

Stitcher

Projection Processor

Data Encoder

Encapsulation Processor

Transmission Processor

Transmitter

(Transmitting-side) Feedback Processor

Transmission

Feedback Information

# FIG. 6

# FIG. 7a

# FIG. 7b

EP 3 745 719 B1

Image stitching, projection, and region-wise packing

Input images $\xrightarrow{B_i}$ Stitching and projection $\longrightarrow$ C Projected frame $\longrightarrow$ Region-wise packing (optional) $\longrightarrow$ D Packed frame(s) $\longrightarrow$ Image/video encoding

# FIG. 8

$(3\pi K \ r/2, \pi K \ r/2)$

Pitch Axis

Roll Axis

Yaw Axis

# FIG. 9a

(a)

(r, 0, 0)    (0, 0)    $(2\pi K_x r, 0)$

(r, π/2, 0)    $(2\pi K_x r/2, \pi K_x r/2)$

$(\pi K_x r, \pi K_x r/2)$

$(0, \pi K_X r)$    $(2\pi K_X r, \pi K_X r)$

(b)

| | top | | |
|---|---|---|---|
| right | front | left | back |
| | bottom | | |

| bottom | top | back |
|---|---|---|
| right | front | left |

(c)

side    top    bottom

side    top    bottom

(d)

2πr

πr

# FIG. 9b

(e)

| Left-top | | Right-top |
| | front | |
| Left-bottom | | Right-bottom |

(f)

width (e.g., 2πr)

(g)

# FIG. 10

(a)                    (b)                    (c)

# FIG. 11

( a )

( b )

( c )

# FIG. 12

EP 3 745 719 B1

# FIG. 13

# FIG. 14

```
                    ( Start )
                        |
                        v
+----------------------------------------------+
| Acquire circular image including 360-degree  |
| image captured                               |~ S1400
| by camera having at least one lens           |
+----------------------------------------------+
                        |
                        v
+----------------------------------------------+
|        Map circular image to picture         |~ S1410
+----------------------------------------------+
                        |
                        v
+----------------------------------------------+
|     Encode picture mapped to circular image  |~ S1420
+----------------------------------------------+
                        |
                        v
+----------------------------------------------+
|   Generate metadata about 360-degree image   |~ S1430
+----------------------------------------------+
                        |
                        v
+---------------------------------------------------------------------+
| Perform processing for storage or transmission on encoded picture   |~ S1440
| and metadata                                                        |
+---------------------------------------------------------------------+
                        |
                        v
                    ( End )
```

# FIG. 15

**360 Video Transmission Apparatus**

360-degree Image → | Data Input Unit | → | Projection Processor | → | Data Encoder |

| Metadata Processor | | Transmitter | → 360-degree Image Data

# FIG. 16

```
                    ( Start )
                        |
                        v
+-------------------------------------------------+
|         Receive 360-degree image data           |  ~ S1600
+-------------------------------------------------+
                        |
                        v
+-------------------------------------------------+
|    Acquire information about encoded picture and |  ~ S1610
|    metadata from 360-degree image data           |
+-------------------------------------------------+
                        |
                        v
+---------------------------------------------------------------+
| Decode picture including circular image including 360-degree  |  ~ S1620
| image based on information about encoded picture              |
+---------------------------------------------------------------+
                        |
                        v
+-------------------------------------------------+
|  Derive circular image from picture based on    |  ~ S1630
|  metadata                                        |
+-------------------------------------------------+
                        |
                        v
+-------------------------------------------------+
|  Process and render circular image based on     |  ~ S1640
|  metadata                                        |
+-------------------------------------------------+
                        |
                        v
                    ( End )
```

# FIG. 17

360 Video Reception Apparatus

360-degree Image Data → Reception Unit → Reception Processor

Data Decoder → Renderer → 360-degree Image For Viewport

REFERENCES CITED IN THE DESCRIPTION

**Patent documents cited in the description**

- US 2016373734 A1

**Non-patent literature cited in the description**

- Text of ISO/IEC FDIS 23090-2 Omnidirectional Media Format. *MPEG Meeting*